(19) Europäisches Patentamt
European Patent Office
Office européen des brevets

(11) EP 4 696 502 A1

(12) **EUROPEAN PATENT APPLICATION**
published in accordance with Art. 153(4) EPC

(43) Date of publication:
18.02.2026 Bulletin 2026/08

(21) Application number: 24836069.5

(22) Date of filing: 03.07.2024

(51) International Patent Classification (IPC):
*B32B 15/08* (2006.01)    *B32B 7/022* (2019.01)
*B32B 7/027* (2019.01)    *B32B 15/18* (2006.01)
*B32B 27/20* (2006.01)

(52) Cooperative Patent Classification (CPC):
**B32B 7/022; B32B 7/027; B32B 15/08;
B32B 15/18; B32B 27/20**

(86) International application number:
**PCT/JP2024/024080**

(87) International publication number:
**WO 2025/009556 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 03.07.2023 JP 2023109650

(71) Applicant: Nippon Steel Corporation
Tokyo 100-8071 (JP)

(72) Inventors:
• **SHIBAO, Fumio**
  **Tokyo 100-8071 (JP)**
• **KAWAMURA, Yasuaki**
  **Tokyo 100-8071 (JP)**
• **FUJII, Takashi**
  **Tokyo 100-8071 (JP)**

(74) Representative: **Vossius & Partner
Patentanwälte Rechtsanwälte mbB
Siebertstraße 3
81675 München (DE)**

(54) **COATED METAL PLATE**

(57) [PROBLEM]
To further improve design properties and productivity of a painted metal sheet.
[SOLUTION]
The present invention relates to the painted metal sheet including: a metal sheet; an organic resin coating layer located on a surface of the metal sheet; and organic resin particles dispersed in the organic resin coating layer, wherein a content of the organic resin particles dispersed in the organic resin coating layer is 1.0 to 16.6 volume% per side to a total solid volume of the organic resin coating layer, in a case where the organic resin coating layer is viewed from above in plan view, the organic resin particles are dispersed in the organic resin coating layer at a surface density of 30 to 120 particles/mm$^2$, and relationships expressed in Formulas (1) to (4) are established in a cross-section obtained by cutting the organic resin coating layer at any position in a thickness direction.

FIG. 2

**Description**

TECHNICAL FIELD

The present invention relates to a painted metal sheet.

BACKGROUND ART

Metal sheets with high design properties are increasingly used for home appliances, building materials, automobiles, and other applications. Examples of such metal sheets with high design properties include, for example, metal sheets with colored organic coatings, metal sheets with highly glossy surfaces, and other metal sheets.

In the metal sheets with high design properties as described above, a flaw resistance of an outermost surface of the metal sheets with the design properties is important to maintain the excellent design properties. For this reason, many proposals have been conventionally made regarding the flaw resistance of the metal sheets with high design properties.

For example, Patent Document 1 listed below has proposed a technology to improve an abrasion resistance of an organic film on a zinc-based plated steel sheet having the organic film by making the organic film contain beads having a particle diameter larger than a film thickness of the organic film (hereinafter also referred to as "large-size beads").

PRIOR ART DOCUMENT

PATENT DOCUMENT

Patent Document 1: International Publication Pamphlet No. WO 2014/112544

SUMMARY OF THE INVENTION

PROBLEMS TO BE SOLVED BY THE INVENTION

However, when the zinc-based plated steel sheet having the organic film containing large-size beads as proposed in Patent Document 1 listed above is coiled or subjected to a predetermined press-working process, the large-size beads may drop out of the organic film, and the design properties of the organic film may be degraded. In addition, there is concern that the large-size beads that drop out of the organic film may contaminate various coiling and press-working facilities, thereby interfering with the processes. For these reasons, it is necessary to take sufficient care when handling the organic film containing large-size beads, and there is room for further improvement from a viewpoint of improving productivity.

In addition, when coiled or press-worked, the large-size beads may be deformed by a coiling tension of the coil, a pressure during the press-working process, or the like, even if the large-size beads do not drop out. When such deformation occurs, the organic film at the deformed portion becomes relatively flat, resulting in a partial change in gloss, which may degrade the desired design properties. This degradation of design properties due to gloss level change is also referred to as pressure marks. Thus, there is room for further improvement in organic films containing large-size beads in terms of maintaining the design properties.

The present invention has been made in view of the above problems, and an object thereof is to provide a painted metal sheet that can further improve design properties and productivity while having an organic resin coating layer containing particles with a particle diameter larger than a film thickness.

MEANS FOR SOLVING THE PROBLEMS

As a result of earnest studies for solving the above-described problems, the present inventors obtained ideas that if surfaces of particles contained in an organic resin coating layer, each having a particle diameter larger than an average film thickness, can be covered with an organic resin, the particles may be prevented from dropping out or being deformed. Based on this idea, the inventors examined in detail conditions for application of paints containing particles with the particle diameter larger than the average film thickness. As a result, the inventors found that it is possible to prevent the particles from dropping out of the organic resin coating layer and deformation, thereby further improving the design properties and productivity of the painted metal sheet when the average particle diameter of the particles, the average film thickness of the organic resin coating layer, and a thickness of the organic resin covering each surface of the particle, and the like satisfy certain conditions,.

The gist of the invention completed based on such findings is as follows.

[1] A painted metal sheet including: a metal sheet; an organic resin coating layer located on a surface of the metal sheet; and organic resin particles dispersed in the organic resin coating layer, wherein a content of the particles in the organic resin coating layer is 1.0 to 16.6 volume% per side to a total solid volume of the organic resin coating layer, in a case where the organic resin coating layer is viewed from above in plan view, the organic resin particles are dispersed in the organic resin coating layer at a surface density of 30 to 120 particles/mm$^2$, and in a cross-section obtained by cutting the organic resin coating layer at any position in a thickness direction, relationships expressed in Formulas (1) to (4) below are established.

$$10 \leq T \leq 40 \text{ ... Formula (1)}$$

$$50 \leq \o \leq 100 \text{ ... Formula (2)}$$

$$1.50 \leq \o/T \leq 10.00 \text{ ... Formula (3)}$$

$$15.00 \leq \o/t \leq 90.00 \text{ ... Formula (4)}$$

Here, in Formulas (1) to (4) above,

T: an average film thickness of the organic resin coating layer at each portion where the organic resin particle is not present in the cross-section,
ø: an average particle diameter of the organic resin particles,
t: an average film thickness of particle-covered portions, each of which is a portion in which a part of the organic resin particle, which protrudes from a surface position of the organic resin coating layer at the portion where the organic resin particle is not present, is covered with the organic resin coating layer in the cross-section,

where units of the T, ø, and t are each μm.

[2] The painted metal sheet according to [1], wherein the organic resin coating layer is located on both surfaces of the metal sheet, the organic resin particles are present only in the organic resin coating layer located on one surface of the metal sheet, and relationships expressed in Formulas (5) and (6) below are established for the two organic resin coating layers located on both surfaces of the metal sheet.

$$3 \leq GA \leq 30 \text{ ... Formula (5)}$$

$$0.7 \leq GA/GB \leq 1.3 \text{ ... Formula (6)}$$

Here, in Formulas (5) and (6) above,

GA: a 60-degree specular gloss $G_S$ (60°) specified in JIS Z 8741:1997 on the surface of the organic resin coating layer containing the organic resin particle,
GB: a 60-degree specular gloss $G_S$ (60°) specified in JIS Z 8741:1997 on the surface of the organic resin coating layer not containing the organic resin particle.

[3] The painted metal sheet according to [1] or [2], wherein the T and t satisfy a relationship expressed in Formula (7) below.

$$5.0 \leq T/t \leq 60.0 \text{ ... Formula (7)}$$

[4] The painted metal sheet according to [1] or [2], wherein a binder resin contained in the organic resin coating layer and the organic resin particle satisfy relationships expressed in Formulas (8) to (10) below.

$$EA \leq EB \text{ ... Formula (8)}$$

$$60 \leq EA \leq 150 \ ... \ \text{Formula (9)}$$

$$60 \leq EB \leq 250 \ ... \ \text{Formula (10)}$$

Here, in Formulas (8) to (10) above,

>   EA: a compressive elastic modulus of the binder resin at 25°C contained in the organic resin coating layer,
>   EB: a compressive elastic modulus of the organic resin particle at 25°C,

where units of the EA and EB are each MPa.

[5] The painted metal sheet according to [1] or [2], wherein the organic resin particles are urethane-based resin particles, and a glass transition temperature Tg of urethane-based resin is in a range of -40 to 40°C.

[6] The painted metal sheet according to [1] or [2], wherein the organic resin particles are acrylic-based resin particles, and a glass transition temperature Tg of acrylic-based resin is in a range of 40 to 160°C.

[7] The painted metal sheet according to [6], wherein in the cross-section obtained by cutting the organic resin coating layer at any position in the thickness direction, a cross-sectional shape of at least some of the acrylic-based resin particles is an approximately elliptical shape, a minor axis direction of the approximately elliptical shape is substantially parallel to the thickness direction of the organic resin coating layer, and a major axis direction of the approximately elliptical shape is substantially parallel to an orthogonal direction to the thickness direction, an average length Mø of the minor axes of the approximately elliptical shapes and the T satisfy a relationship expressed in Formula (11) below.

$$1.5 \leq M\text{ø}/T \leq 80.0 \ ... \ \text{Formula (11)}$$

Here, a unit of the average length Mø of the minor axes is $\mu$m.

[8] The painted metal sheet according to [1] or [2], wherein the metal sheet is a zinc-based plated steel sheet, where a zinc-based plating layer, which is a plating layer containing at least zinc, is located on a surface of a base steel sheet.

[9] The painted metal sheet according to [8], wherein a rust-preventive coating layer containing a rust-preventive pigment and a resin is further located between the organic resin coating layer and the zinc-based plating layer.

[10] The painted metal sheet according to [9], wherein the rust-preventive pigment is a pigment containing at least one or more elements from among P, V, Si, and Mg.

[11] The painted metal sheet according to [1] or [2], wherein the organic resin coating layer further contains a coloring agent.

EFFECT OF THE INVENTION

As explained above, the present invention makes it possible to further improve design properties and productivity of painted metal sheets by preventing particles from dropping out of an organic resin coating layer and deformation.

BRIEF DESCRIPTION OF THE DRAWINGS

FIG. 1A is a schematic diagram for explaining an example of a structure of a painted metal sheet according to an embodiment of the present invention.

FIG. 1B is a schematic diagram for explaining an example of the structure of the painted metal sheet according to the embodiment.

FIG. 1C is a schematic diagram for explaining an example of the structure of the painted metal sheet according to the embodiment.

FIG. 1D is a schematic diagram for explaining an example of the structure of the painted metal sheet according to the embodiment.

FIG. 2 is a schematic diagram for explaining an organic resin coating layer in the painted metal sheet according to the embodiment.

FIG. 3 is a schematic diagram for explaining the organic resin coating layer in the painted metal sheet according to the embodiment.

FIG. 4 is a schematic diagram for explaining the organic resin coating layer in the painted metal sheet according to the embodiment.

EMBODIMENTS FOR CARRYING OUT INVENTION

Hereinafter, preferred embodiments of the present invention will be described in detail with reference to the attached drawings. Note that in the present description and the drawings, components having substantially the same functional configurations are denoted by the same codes to omit duplicated explanations.

(Painted metal sheet)

<Structure of painted metal sheet>

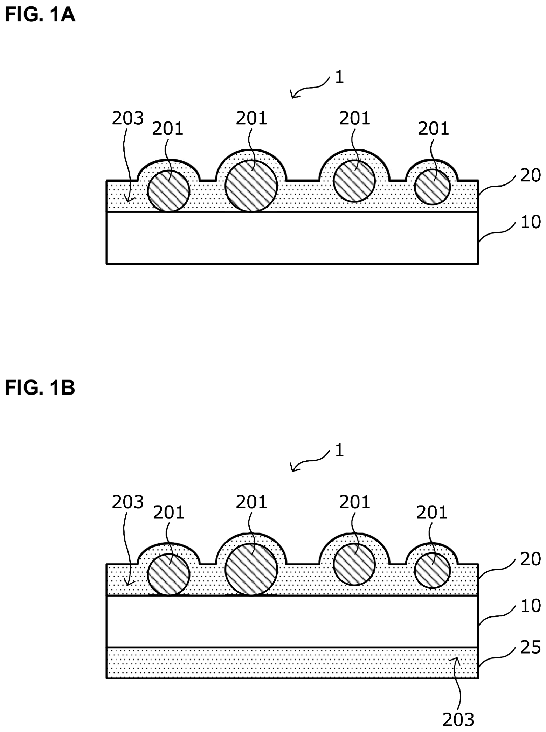

In the following, a structure of a painted metal sheet according to an embodiment of the present invention will be described with reference to FIG. 1A to FIG. 1D. FIG. 1A to FIG. 1D are schematic diagrams for explaining examples of the structure of the painted metal sheet of this embodiment. In this embodiment, the painted metal sheet means a metal sheet with a paint film on its surface. In the painted metal sheet of this embodiment, coloring agents, including various dyes and pigments, may not be contained in such a paint film.

As schematically illustrated in FIG. 1A, a painted metal sheet 1 of this embodiment has a metal sheet 10, which is a base material, and an organic resin coating layer 20 located on one surface of the metal sheet 10. The organic resin coating layer 20 of this embodiment contains organic resin particles 201 in a dispersed state.

As schematically illustrated in FIG. 1B, in the painted metal sheet 1 of this embodiment, the organic resin coating layer 20 containing the organic resin particles 201 is provided on one surface of the base material, metal sheet 10, and an organic resin coating layer 25 not containing the resin particles 201 may be provided on the other surface of the metal sheet 10.

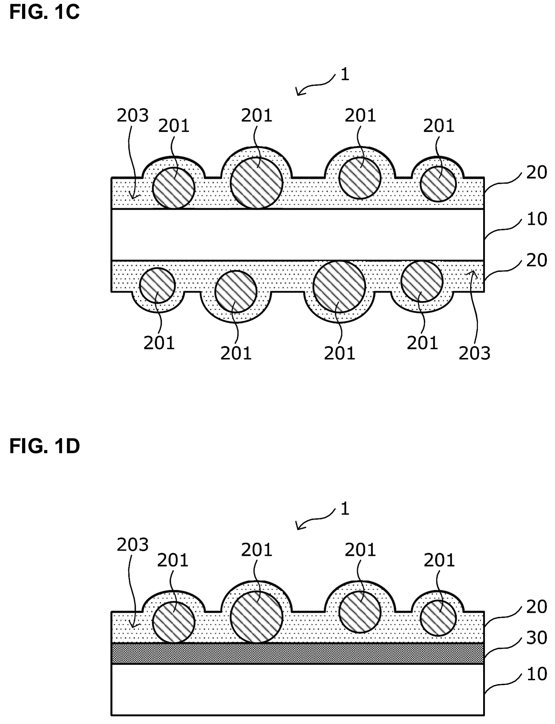

As schematically illustrated in FIG. 1C, the painted metal sheet 1 of this embodiment may have the organic resin coating layers 20 containing the organic resin particles 201 on both surfaces of the base material, metal sheet 10.

As schematically illustrated in FIG. 1D, the painted metal sheet 1 of this embodiment may further have a rust-preventive coating layer 30 containing a rust-preventive pigment and a resin between the metal sheet 10 and the organic resin coating layer 20, as necessary.

Although FIG. 1D illustrates a case in which the rust-preventive coating layer 30 is provided on the painted metal sheet 1 having the structure illustrated in FIG. 1A, the painted metal sheets 1 having the structures illustrated in FIG. 1B and FIG. 1C may be further provided with the rust-preventive coating layer 30 at least between the metal sheet 10 and the organic resin coating layer 20, or between the metal sheet 10 and the organic resin coating layer 25.

In the following, each configuration of the painted metal sheet 1 as illustrated in FIG. 1A to FIG. 1D will be described in detail.

[Metal sheet 10]

In the painted metal sheet 1 of this embodiment, various types of metal sheets can be used as the base material, metal sheet 10. Examples of materials of such a metal sheet include, for example, iron, iron-based alloys, aluminum, aluminum-based alloys, copper, copper-based alloys, titanium, and other materials. It is also possible to use plated metal sheets, in which plating is applied to various types of metal sheets, as the metal sheet 10.

When a steel sheet is used as the metal sheet 10, for example, various steel sheets such as Al-killed steel, ultralow carbon steel containing Ti, Nb, and other elements, and high-strength steel containing additional strengthening elements such as P, Si, Mn in the ultralow carbon steel can be used.

Among the various types of metal sheets described above, it is preferable to use a zinc-based plated steel sheet, in which various types of zinc-based plating layers containing at least zinc are provided on a surface of the base material, steel sheet, as the metal sheet 10 of this embodiment. Examples of the zinc-based plated steel sheet include, for example, zinc-based plated steel sheets such as galvanized steel sheets, zinc-nickel plated steel sheets, zinc-iron plated steel sheets, zinc-chrome plated steel sheets, zinc-aluminum plated steel sheets, zinc-titanium plated steel sheets, zinc-magnesium plated steel sheets, zinc-manganese plated steel sheets, zinc-aluminum-magnesium plated steel sheets, and zinc-aluminum-magnesium-silicon plated steel sheets. In addition, the zinc-based plated steel sheets include the plating, which contains small amounts of different metal elements or impurities such as cobalt, molybdenum, tungsten, nickel, titanium, chromium, aluminum, manganese, iron, magnesium, lead, bismuth, antimony, tin, copper, cadmium, arsenic, and the like, and plating, in which inorganic materials such as silica, alumina, titania are dispersed. Steel sheets having multi-layered plating combining the above plating with other types of plating (for example, iron plating, iron-phosphorus plating, nickel plating, cobalt plating, and the like) may also be used as the zinc-based plating. A plating method is not limited, and various known plating methods, such as electroplating, hot-dip plating, vapor deposition plating, dispersion plating, vacuum plating, and other methods, may be used.

Among such zinc-based plating, it is preferable to use the zinc-aluminum-magnesium alloy plating as the zinc-based plating in particular, and it is more preferable to use the zinc-aluminum-magnesium-silicon alloy-plating, which contains Al: 4 to 22 mass%, Mg: 1 to 10 mass%, Si: 0.0001 to 2.0000 mass%, and the balance of Zn and impurities.

[Al: 4 to 22 mass%]

A content of Al is set to 4 mass% or more, thereby making it possible to further improve the corrosion resistance of the steel sheet. The content of Al is more preferably 5 mass% or more. On the other hand, the content of Al is set to 22 mass% or less, thereby making it possible to further improve the corrosion resistance of the steel sheet while inhibiting saturation of such a corrosion resistance improving effect as above. The content of Al is more preferably 16 mass% or less.

[Mg: 1 to 10 mass%]

A content of Mg is set to 1 mass% or more, thereby making it possible to further improve the corrosion resistance of the steel sheet. The content of Mg is more preferably 2 mass% or more. On the other hand, in a plating bath used for forming the plating layer, a concentration of Mg is adjusted so that the content of Mg in the zinc-based plating layer after manufacture is 10 mass% or less, thereby making it possible to stabilize the generation of dross in the plating bath and stably manufacture a plated steel sheet. In the plating bath used for forming the zinc-based plating layer, it is more preferable to adjust the concentration of Mg so that the content of Mg in the zinc-based plating layer after manufacture is 5 mass% or less.

[Si: 0.0001 to 2.0000 mass%]

A content of Si is set to 0.0001 mass% or more, thereby making it possible to further improve adhesion of the zinc-based plating layer (more specifically, the adhesion between the base steel sheet and the zinc-based plating layer). On the other hand, the content of Si is set to 2.0000 mass% or less, thereby making it possible to further improve the adhesion of the zinc-based plating layer while inhibiting saturation of the adhesion improving effect of the zinc-based plating layer. The content of Si is more preferably 1.6000 mass% or less.

Further, the zinc-based plating layer of this embodiment may contain 1 mass% or less of elements such as Fe, Sb, and Pb, either alone or in combination, in place of part of Zn of the balance.

Examples of the zinc-based steel sheet provided with the zinc-based plating layer having the chemical components as stated above include, for example, a hot-dip zinc-aluminum-magnesium alloy-plated steel sheet having a Zn-6%Al-3%Mg alloy-plating layer, and a hot-dip zinc-aluminum-magnesium-silicon alloy-plated steel sheet (for example, "SUPERDYMA (registered trademark)" manufactured by NIPPON STEEL CORPORATION), such as a plated steel sheet having a Zn-11%Al-3%Mg-0.2%Si alloy-plating layer, and other steel sheets.

Further, plating coating weight of the zinc-based plating layer as above is preferably 30 g/m$^2$ or more in total on both surfaces of the steel sheet (namely, 15 g/m$^2$ or more per side). The coating weight is set to 30 g/m$^2$ or more, thereby making it possible to reliably ensure the corrosion resistance of the zinc-based steel sheet. The plating coating weight is more preferably 40 g/m$^2$ or more in total on both surfaces of the steel sheet. On the other hand, the plating coating weight is preferably 600 g/m$^2$ or less in total on both surfaces of the steel sheet (namely, 300 g/m$^2$ or less per side). The coating weight is set to 600 g/m$^2$ or less, thereby making it possible to achieve further improvement in the corrosion resistance while ensuring surface smoothness of the zinc-based plating layer. The plating coating weight is more preferably 550 g/m$^2$ or less in total on both surfaces of the steel sheet.

When various types of plated metal sheets are used as the metal sheet 10, and when the rust-preventive coating layer 30 is further provided on the surface of the metal sheet 10, the rust-preventive coating layer 30 will be located on a surface of the various plating layers on the plated metal sheet.

A thickness of the metal sheet 10 as described above is not limited, and should be set appropriately according to mechanical strength (for example, tensile strength or the like), workability, and the like required for the painted metal sheet 1 of this embodiment.

[Organic resin coating layer 20]

The organic resin coating layer 20 held by the painted metal sheet 1 of this embodiment will now be described. The organic resin coating layer 20 of this embodiment is a coating layer in which the organic resin particles 201 are present in a dispersed state in the binder resin 203 as a film-forming component, as illustrated in FIG. 1A to FIG. 1D. In addition to the above organic resin particles 201 and binder resin 203, the organic resin coating layer 20 of this embodiment may further contain various additives such as cross-linking agents and coloring agents.

In the painted metal sheet 1 of this embodiment, the organic resin particles 201 are dispersed in the binder resin 203 in the organic resin coating layer 20, and in addition, such organic resin particles 201 satisfy the conditions as detailed below. As a result, in the painted metal sheet 1 of this embodiment, the binder resin 203 achieves the predetermined corrosion resistance and flaw resistance, and the painted metal sheet as a whole achieves excellent design properties with both the grainy and matte-tone appearances. Furthermore, in the painted metal sheet 1 of this embodiment, it is possible to prevent occurrence of pressure marks caused by the relative flattening of the organic coating at the deformed portion.

«Organic resin particles 201»

In the organic resin coating layer 20 of this embodiment, the organic resin particles 201 preferably have predetermined toughness and ductility. The organic resin particles 201 have the predetermined toughness and ductility, thereby making it possible to mitigate impacts applied to the organic resin coating layer 20. As a result, the painted metal sheet 1 of this embodiment can further improve the flaw resistance of the organic resin coating layer 20. In addition, the organic resin particles 201 have the predetermined toughness and ductility, thereby making it possible to further prevent the occurrence of the pressure marks caused by the relative flattening of the organic coating at the deformed portion. Furthermore, even if the organic resin coating layer 20 is scratched, the scratch can be prevented from reaching the metal sheet 10, thus maintaining the corrosion resistance of the painted metal sheet 1.

Here, in the organic resin coating layer 20 of this embodiment, particles made of various materials can be used as the organic resin particles 201 as long as the particles have the predetermined toughness and ductility. However, from a viewpoint of having better toughness and ductility, organic resin particles composed of organic resin are used rather than inorganic particles composed of inorganic compounds such as those represented by silica and ceramics. Organic resins in the present invention refer to resins including synthetic or natural resins, and may contain a small amount of inorganic additives.

Examples of the organic resin particles 201 include, for example, acrylic-based resin particles, polyester-based resin particles, urethane-based resin particles, fluorine-based resin particles, silicone resin particles, polyolefin-based resin particles, and other organic resin particles. Among these resins, the urethane-based resin particles or acrylic-based resin particles are more preferably used as the organic resin particles 201 from a viewpoint that the desired toughness and ductility can be more easily achieved.

Furthermore, when the urethane-based resin particles or acrylic-based resin particles as described above are used as the organic resin particles 201, the resin composing these resin particles preferably exhibits a predetermined glass transition temperature Tg.

More precisely, when the urethane-based resin particles are used as the organic resin particles 201, the glass transition temperature Tg of the urethane-based resin is preferably within a range of -40°C to 40°C. When the acrylic-based resin particles are used as the organic resin particles 201, the glass transition temperature Tg of the acrylic-based resin is preferably within a range of 40°C to 160°C.

A constituent resin of the resin particles used as the organic resin particles 201 has the above glass transition temperature Tg, thereby making it possible that the organic resin particles 201 exhibit even more desirable toughness and ductility. As a result, even if the particles 201 are deformed by an external force applied to the particles 201, they can quickly restore the shape they had before the impact was applied. This makes it possible to further prevent the occurrence of the pressure marks caused by the relative flattening of the organic coating at the deformed portion.

In addition, the use of the acrylic-based resin particles having the above glass transition temperature Tg as the organic resin particles 201 makes it possible to prevent the occurrence of the pressure marks as described above at a lower cost than when using the resin particles made of the urethane-based resin having the above glass transition temperature Tg.

However, when the acrylic-based resin particles having the above glass transition temperature Tg are used as the organic resin particles 201, the acrylic-based resin particles should satisfy certain conditions regarding a shape in addition to the above glass transition temperature Tg. The conditions related to the shape of such acrylic-based resin particles will be described in detail below.

When the urethane-based resin particles are used as the organic resin particles 201, the glass transition temperature Tg of the urethane-based resin is more preferably in a range of -10 to 20°C. When the acrylic-based resin particles are used as the particles 201, the glass transition temperature Tg of the acrylic-based resin is more preferably in a range of 60 to 120°C.

The glass transition temperature Tg can be determined by thermomechanical analysis method (TMA), in which a needle is inserted through a surface of an organic resin particle to be measured, and a constant temperature change is caused to measure a change in thermal expansion of the measurement object.

In the painted metal sheet 1 of this embodiment, a content of the organic resin particles 201 in the organic resin coating layer 20 per side is 1.0 to 16.6 vol% to a total solid volume of the organic resin coating layer 20. When the content of the organic resin particles 201 in the organic resin coating layer 20 per side is less than 1.0 vol%, the content of the organic resin particles 201 is too small, and the desired design properties with both the grainy and matte-tone appearances cannot be exhibited. When the content of the organic resin particles 201 in the organic resin coating layer 20 per side is 1.0 vol% or more, the desired design properties can be achieved as the painted metal sheet 1. The content of the organic resin particles 201 in the organic resin coating layer 20 per side is preferably 2.2 vol% or more, and more preferably 3.4 vol% or more.

On the other hand, when the content of the organic resin particles 201 in the organic resin coating layer 20 per side is more than 16.6 vol%, the flaw resistance required for the organic resin coating layer 20 cannot be achieved as a result of the content of the organic resin particles 201 becoming too high. When the content of the organic resin particles 201 in the organic resin coating layer 20 per side is 16.6 vol% or less, it is possible to achieve the desired design properties while ensuring the flaw resistance required for the organic resin coating layer 20. The content of the organic resin particles 201 in the organic resin coating layer 20 per side is preferably 13.3 vol% or less, and more preferably 10.0 vol% or less.

A method for determining the content of organic resin particles 201 in the organic resin coating layer 20 in the painted metal sheet 1 of this embodiment from a state of the painted metal sheet already manufactured is described below.

As such organic resin particles 201, a plurality of types of organic resin particles with different average particle diameters may be contained. Such organic resin particles 201 may also function as various additives that may be added to the organic resin coating layer 20, such as, for example, coloring agents and rust-preventive agents.

«Binder resin 203»

Any material can be used as the binder resin 203 serving as the film-forming component in the organic resin coating layer 20 of this embodiment, as long as it functions as a binder for the organic resin particles 201. However, from viewpoints of simplicity and cost-effectiveness of manufacture and the viewpoints of corrosion resistance and flaw resistance, it is preferable to use various organic resins as the binder resin 203. Examples of such a binder resin 203 include the acrylic-based resin, the polyester-based resin, the urethane-based resin, the fluorine-based resin, and other organic resins, for example.

Further, in the organic resin coating layer 20 of this embodiment, it is more preferable to select the same type of resin as the organic resin particles 201 used, as the binder resin 203. This improves affinity between the organic resin particles 201 and the binder resin 203 to make it possible to further improve the adhesion and barrier properties of the organic resin coating layer 20.

<Present state of organic resin particles 201 in organic resin coating layer 20>

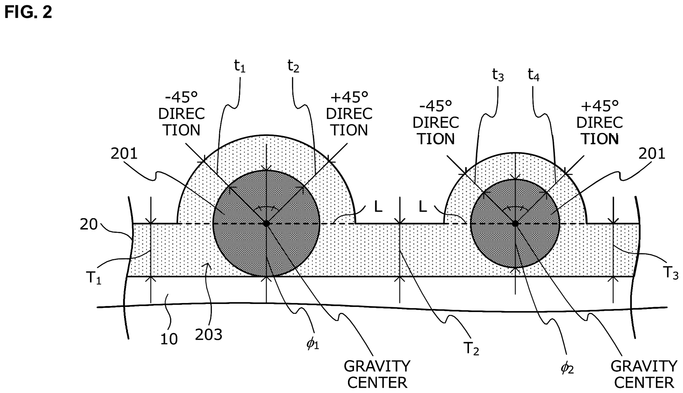

A present state of the organic resin particles 201 in the organic resin coating layer 20 will then be explained in detail with reference to FIG. 2. FIG. 2 is a schematic diagram for explaining the organic resin particles 201 held by the organic resin coating layer in the painted metal sheet of this embodiment.

As mentioned earlier, in the painted metal sheet 1 of this embodiment, the organic resin particles 201 are present in the dispersed state covered with the film-forming component, such as the binder resin 203 in the organic resin coating layer 20. In discussing the present state of such organic resin particles 201, a cross-section obtained by cutting the organic resin coating layer 20 of this embodiment at any position in a thickness direction is focused on, as schematically illustrated in FIG. 2.

In the painted metal sheet 1 of this embodiment, when the cross-section obtained as above is observed with an electron microscope (more precisely, with a field emission scanning electron microscope (FE-SEM)), respective relationships expressed in Formulas (101) to (104) below are established between the average particle diameter of the organic resin particles 201 and the average film thickness of the organic resin coating layer 20.

$$10 \leq T \leq 40 \ \dots \ \text{Formula (101)}$$

$$50 \leq \o \leq 100 \ \dots \ \text{Formula (102)}$$

$$1.50 \leq \o/T \leq 10.00 \ \dots \ \text{Formula (103)}$$

$$15.00 \leq \o/t \leq 90.00 \ \dots \ \text{Formula (104)}$$

Here, in Formulas (101) to (104) above,

T: the average film thickness of the organic resin coating layer 20 at each portion where the organic resin particle 201 is not present in the cross-section,

ø: the average particle diameter of the organic resin particles 201,

t: an average film thickness of "particle-covered portions", each of which is a portion in which a part of the organic resin particle 201, which protrudes from a surface position of the organic resin coating layer 20 at the portion where the organic resin particle 201 is not present, is covered with the organic resin coating layer 20 in the cross-section. Further, units of the T, ø, and t above are each $\mu$m.

In examining the average film thickness T of the organic resin coating layer 20, the average particle diameter ø, and the average film thickness t of the particle-covered portions as described above, in principle, any $100 \times 100$ $\mu$m visual field in the focused cross-section is observed using FE-SEM. When a large-size particle that cannot be fully contained in the $100 \times 100$ $\mu$m visual field is observed, the observation visual field should be enlarged and adjusted as necessary so that the particle is contained in the visual field and the particle diameter, the film thickness of the organic resin coating layer, and the film thickness of the particle-covered portion can be measured.

◊ Average particle diameter ø of organic resin particles 201

When the average particle diameter ø of the organic resin particles 201 is less than 50 $\mu$m, the average particle diameter of the organic resin particles 201 is too small to achieve the desired flaw resistance. When the average particle diameter ø of the organic resin particles 201 is 50 $\mu$m or more, the flaw resistance required for the painted metal sheet 1 of this embodiment can be achieved. The average particle diameter ø of the organic resin particles 201 is preferably 55 $\mu$m or more, and more preferably 60 $\mu$m or more.

On the other hand, when the average particle diameter ø of the organic resin particles 201 is more than 100 $\mu$m, the average particle diameter of the organic resin particles 201 becomes too large, and as a result, the particles easily drop out of the organic resin coating layer 20, and the desired design properties cannot be achieved. When the average particle diameter ø of the organic resin particles 201 is 100 $\mu$m or less, dropout of the organic resin particles 201 from the organic resin coating layer 20 can be prevented, and the desired design properties can be achieved. The average particle diameter ø of the organic resin particles 201 is preferably 90 $\mu$m or less, and more preferably 85 $\mu$m or less.

The average particle diameter ø of the organic resin particles 201 in the cross-section as described above is identified by the following procedure. First, while repeatedly observing and polishing the cross-section obtained by cutting the organic resin coating layer 20 at any position, each measurement value used to calculate the average particle diameter ø of the particles 201, the average film thickness T of the organic resin coating layer 20, and the average film thickness t of the particle-covered portions for each cross-section obtained by polishing, is measured and recorded according to the following procedure

In identifying the average particle diameter ø of the particles 201, a cross-sectional area S of the focused particle 201 in any visual field in each cross-section is measured as a measurement value used to calculate the above average particle diameter ø.

Then, using each obtained cross-sectional area S, the particle diameter (circle-equivalent diameter) corresponding to each cross-sectional area can be calculated as $2 \times (S/\pi)^{0.5}$. The cross-section in which the particle diameter of the organic resin particle 201 present in the visual field with the size of 100 $\mu$m $\times$ 100 $\mu$m is the maximum, as determined in this manner, is identified from among a plurality of cross-sections observed. The cross-section identified as having the maximum particle diameter is selected as one of the cross-sections for identifying the average particle diameter ø of the organic resin particles 201, the average film thickness T of the organic resin coating layer 20, and the average film thickness t of the particle-covered portions.

Here, in this embodiment, when two or more organic resin particles 201 are observed in one visual field, an operation of finding a maximum value of the particle diameter of one focused organic resin particle 201 (for example, referred to as a particle A), and an operation of finding a maximum value of the particle diameter of another organic resin particle 201 (for example, referred to as a particle B) are performed separately and independently. The above measurements are performed for any 20 focused organic resin particles 201, and an average value of the 20 measurement values obtained is treated as the average particle diameter ø of the organic resin particles 201.

In the example illustrated in FIG. 2, it is assumed that there are two resin particles 201 in a visual field, and $ø_1$, $ø_2$ are obtained as the maximum values of the particle diameters of the organic resin particles 201 through the measurements as described above. In this case, the above two values of $ø_1$ and $ø_2$ are used as the measurement values of the particle diameters for calculating the average particle diameter ø of the organic resin particles 201.

The following points should be noted when selecting a cross-section from among a plurality of cross-sections to identify the average particle diameter ø of the organic resin particles 201, the average film thickness T of the organic resin coating layer 20, and the average film thickness t of the particle-covered portions. That is, the circle-equivalent diameter does not necessarily reach the maximum at the first cross-section observed. Therefore, the calculation of the circle-equivalent diameter from the cross-sectional area after slightly polishing is repeated. In this way, the point of the maximum size is found.

◊ Average film thickness T of organic resin coating layer 20 at each portion where organic resin particle 201 is not present in cross-section

When the average film thickness T of the organic resin coating layer 20 at each portion where the organic resin particle 201 is not present in the cross-section is less than 10 $\mu$m, the thickness of the organic resin coating layer 20 is too thin to achieve the desired corrosion resistance. When the average film thickness T is 10 $\mu$m or more, the corrosion resistance required for the painted metal sheet 1 of this embodiment can be achieved. The average film thickness T is preferably 13 $\mu$m or more, more preferably more than 15 $\mu$m, and further preferably 16 $\mu$m or more.

On the other hand, when the average film thickness T of the organic resin coating layer 20 at each portion where the organic resin particle 201 is not present in the cross-section is more than 40 $\mu$m, the organic resin coating layer 20 is too thick and the adhesion of the organic resin coating layer 20 decreases, which is not desirable. When the average film thickness T is 40 $\mu$m or less, the desired corrosion resistance can be achieved while ensuring the adhesion of the organic resin coating layer 20. The average film thickness T is preferably 35 $\mu$m or less, and more preferably 30 $\mu$m or less.

The average film thickness T of the organic resin coating layer 20 at each portion where the organic resin particle 201 is not present in the cross-section, as described above, is identified by the following procedure. First, the thickness of the organic resin coating layer 20 at the portion where the organic resin particle 201 is not present is measured at any one location in a visual field in the focused cross-section. At this time, the thickness of the organic resin coating layer 20 at the portion where the organic resin particle 201 is not present can be measured using a length measurement function or the like implemented in the FE-SEM. The visual field is changed five times, and a value obtained by averaging the five measurement values is the average film thickness T of the organic resin coating layer 20 at each portion where the organic resin particle 201 is not present.

The cross-section for calculating the average film thickness T as described above shall be the cross-section selected to identify the average particle diameter ø of the organic resin particles 201 as described above.

In the case of FIG. 2, it is assumed that in one focused visual field, measurement results of thicknesses $T_1$, $T_2$, and $T_3$ are obtained at three locations, respectively, where the organic resin particles 201 are not present. In this case, an average value of the thicknesses of the organic resin coating layer 20 in one focused visual field is $(1/3) \times (T_1 + T_2 + T_3)$. This observation is performed for any 5 visual fields, and the obtained plurality of average values are further averaged by the number of visual fields to obtain the average film thickness T of the organic resin coating layer 20 at each portion where the resin particle 201 is not present.

◊ Relationship between average particle diameter ø of organic resin particles 201 and average film thickness T of organic resin coating layer 20

In the organic resin coating layer 20 of this embodiment, a ratio (ø/T) obtained by dividing the average particle diameter ø of the organic resin particles 201 by the average film thickness T obtained as described above is 1.50 or more. When the ratio (ø/T) is less than 1.50, the thickness of the organic resin coating layer 20 is too thick compared to the average particle diameter ø of the organic resin particles 201, resulting in an insufficient degree of protrusion of the organic resin particles 201, and the desired flaw resistance and design properties cannot be achieved. When the ratio (ø/T) is 1.50 or more, it is possible to achieve the desired design properties while achieving the flaw resistance required for the painted metal sheet 1. The value of the ratio (ø/T) is preferably 1.80 or more, and more preferably 2.00 or more.

On the other hand, when the value of the ratio (ø/T) is more than 10.00, the average particle diameter ø of the organic resin particles 201 is too large for the average film thickness T, making it difficult for the organic resin particles 201 to be stably held by the organic resin coating layer 20, resulting in the organic resin particles 201 dropping off easily and the desired design properties cannot be achieved. The value of the ratio (ø/T) is preferably 7.00 or less, and more preferably 5.00 or less.

◊ Relationship between average particle diameter ø of organic resin particles 201 and average film thickness t of particle-covered portions

As is clear from the fact that the ratio (ø/T) is 1.50 or more in Formula (103) above, some organic resin particles 201 protrude from the surface position of the organic resin coating layer 20 at the portion where the organic resin particle 201 is not present. Even for the organic resin particle 201 in such a state, the surface of the organic resin particle 201 is covered with the film-forming component, such as the binder resin 203 in the organic resin coating layer 20, as schematically illustrated in FIG. 2. In the following, the relationship between the average particle diameter ø of the organic resin particles 201 and the average film thickness of the film-forming component covering the organic resin particles 201, as described above, will be explained with reference to FIG. 2.

The "portion in which a part of the organic resin particle 201, which protrudes from the surface position of the organic resin coating layer 20 at the portion where the organic resin particle 201 is not present, is covered with the organic resin coating layer 20" in the cross-section, as previously mentioned, is referred to as a "particle-covered portion". In the example illustrated in FIG. 2, an appropriately semicircular portion located above a line segment L connecting each surface position of the organic resin coating layer 20 at the portion where the organic resin particle 201 is not present is the "particle-covered portion".

In this embodiment, the average film thickness of the film-forming component covering the surfaces of the organic resin particles 201 at the particle-covered portions as described above is denoted as t. The average film thickness t of such particle-covered portions is identified by the following procedure.

First, a position of a gravity center is identified for each of the organic resin particles 201 in the focused visual field. Here, the position of the gravity center can be identified by analyzing an image obtained by microscopic observation using a known method. Then, a straight line passing through the identified gravity centers and parallel to a surface normal direction of the metal sheet 10 is virtually set. With the line thus set as a reference, auxiliary lines are set virtually in +45°and -45° directions. The film thicknesses of the film-forming component on the auxiliary lines set in this way are measured using a length measuring function or the like implemented in the FE-SEM. Thus, two measurement values are obtained from a single organic resin particle 201 present in the visual field, as also schematically illustrated in FIG. 2.

It is assumed that two organic resin particles 201 are present in one visual field, as illustrated in FIG. 2. In this case, measurement values t1 and t2 are obtained from the organic resin particle 201 located on the left side of the figure, and measurement values t3 and t4 are obtained from the organic resin particle 201 located on the right side of the figure. An average of the measurement values thus obtained (in the case of FIG. 2, $(1/4) \times (t_1 + t_2 + t_3 + t_4)$) is the average film thickness of the particle-covered portions in the focused visual field.

Such measurements are carried out for any 20 visual fields in the focused cross-section, and an average value of the film thicknesses of the particle-covered portions is calculated in each of the visual fields. Then, the obtained plurality of average values are further averaged over the number of visual fields, and the resulting value is used as the average film thickness t of the particle-covered portions.

In the organic resin coating layer 20 of this embodiment, the average film thickness t of the particle-covered portions thus obtained has a value of more than 0 $\mu$m. The larger the average film thickness t of the particle-covered portions, the more effectively an applied force can be dispersed when a coiling tension of a coil, a pressure during press-working process, or the like is applied to the particle-covered portion, and the more effectively generation of pressure marks, or the like, can be prevented and the design properties of the painted metal sheet 1 can be further improved.

The average film thickness t of the particle-covered portions as described above is preferably 0.6 $\mu$m or more, and more preferably 0.7 $\mu$m or more. The average film thickness t of the particle-covered portions is preferably 5.0 $\mu$m or less, and more preferably 3.0 $\mu$m or less.

When the straight line passing through the gravity centers of the organic resin particles 201 and parallel to the surface normal direction of the metal sheet 10 is used as the virtual auxiliary line as described above, the film thickness of the film-forming component on such auxiliary line (for example, the film-forming component on a bisector of an angle formed by two virtual auxiliary lines set at +45° and -45° directions in FIG. 2) may be zero. However, in this embodiment, the average film thickness t of the particle-covered portions, determined by the method described above, should be more than 0 $\mu$m.

In the organic resin coating layer 20 of this embodiment, a ratio (ø/t) defined by the average film thickness t of the particle-covered portions obtained as described above and the average particle diameter ø of the particles 201 is 15.00 or more. When the ratio (ø/t) is less than 15.00, the average film thickness t of the particle-covered portions is too thick compared to the average particle diameter ø of the organic resin particles 201, resulting in an insufficient degree of protrusion of the organic resin particles 201, and the desired flaw resistance and design properties cannot be achieved. When the value of the ratio (ø/t) is 15.00 or more, it is possible to achieve the desired design properties while achieving the flaw resistance required for the painted metal sheet 1. The value of the ratio (ø/t) is preferably 30.00 or more, and more preferably 50.00 or more.

On the other hand, when the value of the ratio (ø/t) is more than 90.00, the average particle diameter ø of the organic resin particles 201 is too large compared to the average film thickness t. As a result, the particles 201 are not held stably by the film-forming component, and the organic resin particles 201 tend to drop out and the desired design properties cannot be achieved. The value of the ratio (ø/t) is preferably 85.00 or less, and more preferably 80.00 or less.

◊ Relationship between average film thickness T of organic resin coating layer 20 and average film thickness t of particle-covered portions

In the organic resin coating layer 20 of this embodiment, it is preferable that the average film thickness t of the particle-covered portions obtained as described above and the average film thickness T of the organic resin coating layer 20 at each portion where the organic resin particle 201 is not present in the cross-section satisfy the following relationship. More precisely, a ratio (T/t) of the average film thickness T of the organic resin coating layer 20 to the average film thickness t of the particle-covered portions should satisfy a relationship expressed in Formula (105) below.

$$5.0 \leq T/t \leq 60.0 \ldots \text{Formula (105)}$$

When the ratio (T/t) is 5.0 or more, the organic resin coating layer 20 of this embodiment can hold the organic resin particles 201 more stably and can achieve better flaw resistance and design properties. The ratio (T/t) is more preferably 8.0 or more.

On the other hand, when the ratio (T/t) is 60.0 or less, it is possible to achieve better corrosion resistance while ensuring the adhesion of the organic resin coating layer 20. The ratio (T/t) is more preferably 50.0 or less.

◊ Distribution state of organic resin particles 201 when organic resin coating layer 20 is viewed from above in plan view

With the relationships expressed in Formulas (101) to (104) above established, in the painted metal sheet 1 of this embodiment, while the particles 201 are covered with the film-forming component of the organic resin coating layer 20, a distribution state is achieved where the degree of protrusion of the particles is recognizable at the location where the organic resin particles 201 are present. As a result, in the painted metal sheet 1 of this embodiment, a characteristic appearance caused by the shape of the organic resin particles 201 is achieved, and the high design properties are exhibited.

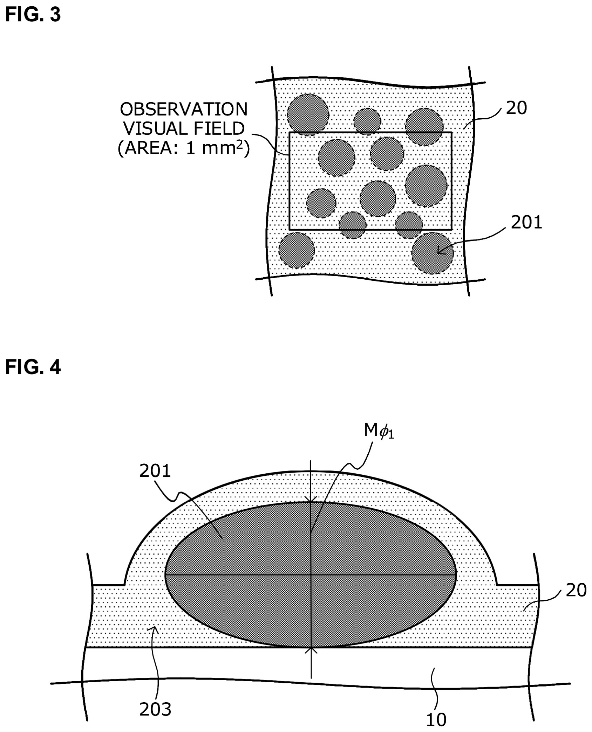

Here, the distribution state of organic resin particles 201 when the organic resin coating layer 20 is viewed from above in plan view is explained with reference to FIG. 3. FIG. 3 is a schematic diagram for explaining the organic resin particles held by the organic resin coating layer in the painted metal sheet of this embodiment.

As schematically illustrated in FIG. 3, the organic resin coating layer 20 of this embodiment is focused on when viewed from above in plan view. As described above, although the organic resin particles 201 are covered with the film-forming component of the organic resin coating layer 20, the positions of the organic resin particles 201 can be grasped when viewed from above in plan view. In FIG. 3, the positions of such organic resin particles 201 are indicated by dashed lines.

In the painted metal sheet 1 of this embodiment, the organic resin particles 201 are dispersed in the organic resin coating layer 20 at a surface density of 30 to 120 particles/mm$^2$ when the organic resin coating layer 20 is viewed from above in plan view, as illustrated in FIG. 3.

Here, the surface density of such organic resin particles 201 is identified by observing the surface of the organic resin coating layer 20 from above with an optical microscope. In more detail, the optical microscope is used to observe any visual field with a size of 1 mm$^2$, and the number of organic resin particles 201 present in the visual field is counted. In this case, when only a part of a certain organic resin particle 201, rather than the entirety of the particle, is present in the visual field, the number of particles is counted to one decimal place, for example, 0.1 to 0.9, depending on an area percentage of the particle present in the visual field. When a plurality of organic resin particles 201 overlap in the thickness direction of the organic resin coating layer 20, the entire organic resin particles 201 that overlap are counted as one. Such counting is performed for any five visual fields, and an average value of the five counts obtained is the surface density of the particles 201. Here, when the above average value is calculated, if the average value obtained includes a decimal point value, the decimal point value shall be rounded down.

A shape of the visual field for counting the number of particles is illustrated in FIG. 3 as a rectangle, but the shape of the visual field is not limited. For example, the shape of the visual field for counting the number of particles may be square, polygonal, circular, or elliptical.

When such surface density is less than 30 particles/mm$^2$, the number of organic resin particles 201 contributing to the high design properties exhibited by the painted metal sheet 1 is too small, and the design properties required for the painted metal sheet 1 cannot be achieved. In such a case, the degree of protrusion of the organic resin particles 201 is insufficient, making it difficult to achieve the flaw resistance required for the painted metal sheet 1. When the surface density is 30 particles/mm$^2$ or more, it is possible to achieve the design properties and flaw resistance required for the painted metal sheet 1. The surface density of the organic resin particles 201 is preferably 35 particles/mm$^2$ or more, and more preferably 50 particles/mm$^2$ or more.

On the other hand, when the surface density of the organic resin particles 201 is more than 120 particles/mm$^2$, a probability of a plurality of organic resin particles 201 overlapping in the thickness direction increases, making the organic resin particles 201 more likely to drop out, which is undesirable. By keeping the surface density at 120 particles/mm$^2$ or less, it is possible to achieve the design properties and flaw resistance required for the painted metal sheet 1 while preventing the drop out of the organic resin particles 201. The surface density of the organic resin particles 201 is

preferably 110 particles/mm$^2$ or less, and more preferably 100 particles/mm$^2$ or less.

It is possible to identify the content of the particles 201 in the organic resin coating layer 20 in the painted metal sheet 1 of this embodiment from the state of the painted metal sheet that has already been manufactured by using the surface density of the organic resin particles 201, the average particle diameter ø of the organic resin particles 201, and the average film thickness T of the organic resin coating layer 20 at each portion where the organic resin particle 201 is not present in the cross-section, which are identified as described above. The method is described below.

First, it is assumed that the organic resin particles 201 are spherical, and an average volume V of the particles is calculated using the average particle diameter ø of the organic resin particles 201 according to Equation (a) below. Next, the average volume V of the particles is multiplied by the surface density of the organic resin particles 201 to determine the volume of the organic resin particles 201 per unit area (1 mm$^2$). Subsequently, the average film thickness T at each portion where the organic resin particle 201 is not present is multiplied by 1 mm$^2$ to determine the volume of the organic resin coated layer 20 per unit area (1 mm$^2$). Finally, a volume percentage is calculated using Equation (b) below.

$$V = 4/3\pi\o^3 \text{ ... Equation (a)}$$

$$\text{Volume\% of organic resin particles 201}$$
$$= 100 \times \text{surface density of organic resin particles 201} \times V/(T \times 1\text{ mm}^2) \text{ ... Equation (b)}$$

Furthermore, in the organic resin coating layer 20 of this embodiment, it is acceptable for some organic resin particles 201 to be partially exposed from the organic resin coating layer 20, not completely covered with the organic resin coating layer 20. However, an amount of such partially exposed organic resin particles 201 should be as small as possible, and the amount of the partially exposed organic resin particles 201 is preferably 20 particles/mm$^2$ or less at the same surface density as above, and 0 particles/mm$^2$ is most preferred.

«Compressive elastic moduli of organic resin particle 201 and binder resin 203»

Furthermore, in the organic resin coating layer 20 of this embodiment, it is more desirable that the organic resin particle 201 and binder resin 203 contained in the coating layer satisfy all of the relationships expressed in Formulas (106) to (108) below.

$$EA \leq EB \text{ ... Formula (106)}$$

$$60 \leq EA \leq 150 \text{ ... Formula (107)}$$

$$60 \leq EB \leq 250 \text{ ... Formula (108)}$$

Here, in Formulas (106) to (108) above,

EA: Compressive elastic modulus of the binder resin 203 at 25°C contained in the organic resin coating layer 20
EB: Compressive elastic modulus of the organic resin particle 201 at 25°C contained in the organic resin coating layer 20

where units of EA and EB are each MPa.

When the compressive elastic modulus at 25°C exhibited by each of the organic resin particle 201 and the binder resin 203 satisfies all of the relationships expressed in Formulas (106) to (108) above, the binder resin 203 can more easily follow deformation of the organic resin particles 201 when an external force is applied to the organic resin particles 201 and the particles are deformed (in other words, the binder resin 203 can more easily deform in accordance with the deformation of the organic resin particles 201). As a result, excess voids between the organic resin particles 201 and the binder resin 203 are prevented, and the adhesion and barrier properties of the organic resin coating layer 20 are further improved.

Here, the compressive elastic modulus EA of the binder resin 203 at 25°C is more preferably 80 or higher. The compressive elastic modulus EA of the binder resin 203 at 25°C is more preferably 130 or lower. On the other hand, the compressive elastic modulus EB of the organic resin particle 201 at 25°C is more preferably 90 or higher. The compressive elastic modulus EB of the organic resin particle 201 at 25°C is more preferably 210 or lower.

The compressive elastic moduli EA, EB of the organic resin particle 201 and the binder resin 203 at 25°C can be identified by focusing on the cross-section obtained by cutting the organic resin coating layer 20 of this embodiment in the thickness direction and measuring a compressive stress-strain curve for each of the organic resin particles 201 and the binder resin 203. In more detail, a nanoindenter as an indenter is pressed into each of the portions corresponding to the organic resin particle 201 and the binder resin 203 in the focused cross-section, and a load and displacement are measured in accordance with JIS K 7181:2011. At this time, a measurement temperature is set to 25°C. The compressive stress-strain curve can be obtained for each of the organic resin particle 201 and the binder resin 203 through such measurements. From the obtained compressive stress-strain curves, the compressive elastic moduli of the organic resin particle 201 and the binder resin 203 can be calculated in accordance with JIS K 7181:2011.

The above measurements should be carried out at 10 locations for each of the organic resin particle 201 and the binder resin 203, and average values of the obtained plurality of compressive elastic moduli should be the compressive elastic moduli EB, EA of the organic resin particle 201 and the binder resin 203 in focus.

«Shape of organic resin particle when using acrylic-based resin particle»

As mentioned above, the acrylic-based resin particles may be used as the organic resin particles 201, but such acrylic-based resin particles should preferably satisfy shape conditions described below. The shape conditions that the acrylic-based resin particles should preferably satisfy are explained below with reference to FIG. 4. FIG. 4 is a schematic diagram for explaining the organic resin particle contained in the organic resin coating layer in the painted metal sheet of this embodiment.

The acrylic-based resin particle, which is an example of the organic resin particle 201 held by the organic resin coating layer 20, preferably has an approximately circular cross-sectional shape as illustrated in FIG. 2. However, at least some of the acrylic-based resin particles may have an approximately elliptical cross-sectional shape in the cross-section obtained by cutting the organic resin coating layer 20 at any position in the thickness direction, as illustrated in FIG. 4.

In addition, the acrylic-based resin particle with the approximately elliptical shape, as illustrated in FIG. 4, preferably has a minor axis direction of the approximately elliptical shape that is substantially parallel to the thickness direction of the organic resin coating layer 20, and a major axis direction of the approximately elliptical shape that is substantially parallel to an orthogonal direction to the thickness direction (in other words, substantially parallel to the surface of the metal sheet 10).

Furthermore, when an average length of the minor axes of the approximately elliptical shapes of the acrylic-based resin particles is denoted as Mø (unit: $\mu$m), it is preferable that the average length Mø and the average film thickness T of the organic resin coating layer 20 at each portion where the organic resin particle 201 is not present satisfy a relationship expressed in Formula (109) below.

$$1.5 \leq M\text{ø}/T \leq 80.0 \ \dots \ \text{Formula (109)}$$

The acrylic-based resin particle used as the organic resin particle 201 has a glass transition temperature as described above, and even if its cross-sectional shape is approximately elliptical, as long as the cross-sectional shape satisfies the relationship in Formula (109) above, the portion where the acrylic-based resin particle with the approximately elliptical shape is present will not be visually recognized as the pressure mark. Therefore, even if the acrylic-based resin particle deforms due to coiling tension of the coil, pressure during the press-working process, or the like, the design properties exhibited by the painted metal sheet 1 of this embodiment can be maintained.

Here, the average length Mø of the minor axes of the approximately elliptical shapes can be identified as follows. That is, the length of the minor axis of the approximately elliptical shape present in any visual field is measured in the cross-section used to identify the average particle diameter ø of the organic resin particles 201, the average film thickness T of the organic resin coating layer 20, and the average film thickness t of the particle-covered portions. For example, when the acrylic-based resin particle with the elliptical shape as illustrated in FIG. 4 is present in the visual field, a length $M\text{ø}_1$ in the figure is measured using the length measurement function implemented in the FE-SEM. Such measurements are carried out on all acrylic-based resin particles with the approximately elliptical shapes present within the visual field, and an average value of the obtained measurement values is calculated. Such measurements are carried out for 20 visual fields in the cross-section, and a plurality of average values obtained are further averaged by the number of visual fields. The average value obtained in this manner is taken as the average length Mø of the minor axes of the approximately elliptical shapes.

A ratio (Mø/T) is preferably 5.0 or more, and more preferably 10.0 or more. In addition, the ratio (Mø/T) is preferably 70.0 or less, and more preferably 60.0 or less.

«Other components»

The organic resin coating layer 20 of this embodiment may contain various additives such as cross-linking agents and coloring agents, as necessary, in addition to the organic resin particles 201 and binder resin 203 described above.

The coloring agent is not specified, and various known coloring agents (that is, various dyes and pigments) can be used depending on a color tone desired for the organic resin coating layer 20. Examples of such coloring agents include, for example, an aluminum pigment, titanium oxide, zinc oxide, zirconium oxide, calcium carbonate, barium sulfate, kaolin clay, carbon black, iron oxide, hansa yellow, pyrazolone orange, phthalocyanine, azo-based pigment carbon black, and other coloring agents. Further, a content thereof can also be set appropriately, which is about 3 to 60 mass%, for example.

Further, the organic resin coating layer 20 of this embodiment may further contain additives such as a rust-preventive pigment, extender, surface modified metal powders or glass powders, a dispersing agent, a leveling agent, wax, and aggregates, a diluting solvent, and so on, as necessary, within a range that does not impair the above-described effects.

Here, when the rust-preventive pigment is contained in the organic resin coating layer 20, its content is preferably set to about 1 to 15 mass%, for example. Further, various known rust-preventive pigments can be used as the rust-preventive pigment.

Hereinabove, the organic resin coating layer 20 held by the painted metal sheet 1 of this embodiment has been described in detail, with reference to FIG. 2 to FIG. 4.

[Organic resin coating layer 25]

The organic resin coating layer 25 that may be held by the painted metal sheet 1 of this embodiment may have the same configuration as the above organic resin coating layer 20, except that it does not have the organic resin particles 201 as explained earlier. That is, such an organic resin coating layer 25 has at least the binder resin 203 as the film-forming component, and may further have various additives. Therefore, a detailed description of the organic resin coating layer 25 of this embodiment is omitted below.

[Rust-preventive coating layer 30]

Next, the rust-preventive coating layer 30 provided between the metal sheet 10 and the organic resin coating layer 20, as necessary, in the painted metal sheet 1 of this embodiment will be briefly described. Such a rust-preventive coating layer 30 is a coating layer containing a rust-preventive pigment and a resin.

The resin contained in the rust-preventive coating layer 30 functions as the film-forming component, and any material can be used. However, various organic resins are preferred as such a resin from viewpoints of simplicity and cost-effectiveness of manufacture, as well as corrosion resistance and flaw resistance. Examples of such resins include, for example, the acrylic-based resin, the polyester-based resin, the urethane-based resin, the fluorine-based resin, and other organic resins.

The rust-preventive coating layer 30 of this embodiment can contain various known rust-preventive pigments as the rust-preventive pigments. However, the rust-preventive coating layer 30 of this embodiment preferably contains pigments containing at least one or more elements from among P, V, Si, and Mg as such rust-preventive pigments.

Examples of the pigments containing at least one or more elements from among P, V, Si, and Mg include, for example, zinc phosphate, zinc phosphite, zinc magnesium phosphate, magnesium phosphate, magnesium phosphite, silica, calcium ion-exchange silica, zirconium phosphate, aluminum dihydrogen tripolyphosphate, zinc oxide, zinc molybdophosphate, barium metaborate, strontium chromate, and other pigments.

An average film thickness of the rust-preventive coating layer 30 is not limited, and should be, for example, about 3.0 to 12.0 $\mu$m.

<Gloss level of painted metal sheet 1>

One of the characteristics corresponding to the high design properties exhibited by the painted metal sheet 1 of this embodiment is a gloss level, which exhibits the matte-tone appearance. The gloss level is explained in detail below.

In the painted metal sheet 1 of this embodiment, when a 60-degree specular gloss $G_S$ (60°) specified in JIS Z 8741:1997 is measured on the surface of the organic resin coating layer 20 containing the organic resin particles 201, a value of the 60-degree specular gloss $G_S$ (60°) is preferably within a range of 3 or higher and 30 or lower. In the painted metal sheet 1 of this embodiment, the surface of the organic resin coating layer 20 exhibits the gloss level in the above range, making the painted metal sheet 1 of this embodiment possible to exhibit the more excellent matte-tone appearance (and thus the more excellent design properties). The value of the 60-degree specular gloss $G_S$ (60°) is more preferably 5 or higher. The value of the 60-degree specular gloss $G_S$ (60°) is more preferably 25 or lower.

Furthermore, when the painted metal sheet 1 of this embodiment has the organic resin coating layer 20 containing the organic resin particles 201 and the organic resin coating layer 25 not containing the organic resin particles 201, as illustrated in FIG. 1B, it is desirable that the relationships expressed in Formulas (110) and (111) below be satisfied.

$$3 \leq GA \leq 30 \ ... \ \text{Formula (110)}$$

$$0.7 \leq GA/GB \leq 1.3 \ ... \ \text{Formula (111)}$$

Here, in Formulas (110) and (111) above,

GA: 60-degree specular gloss $G_S$ (60°) specified in JIS Z 8741:1997 on the surface of the organic resin coating layer 20 containing the organic resin particles 201,
GB: 60-degree specular gloss $G_S$ (60°) specified in JIS Z 8741:1997 on the surface of the organic resin coating layer 25 not containing the organic resin particles 201.

Furthermore, any gloss meter in accordance with JIS Z 8741:1997 can be used to measure the 60-degree specular gloss $G_S$ (60°).

Even when the painted metal sheet 1 of this embodiment has the organic resin coating layer 25 not containing the organic resin particles 201, the gloss level of the painted metal sheet 1 satisfies both Formulas (110) and (111), thereby making it possible to recognize the excellent matte-tone appearance regardless of which side of the coating layer the painted metal sheet 1 is viewed from.

Here, the ratio (GA/GB) is preferably 0.9 or more. Furthermore, the ratio (GA/GB) is preferably 1.1 or less.

The 60-degree specular gloss $G_S$ (60°) can be measured using various gloss meters in accordance with JIS Z 8741:1997.

The painted metal sheet 1 of this embodiment has been described in detail with reference to FIG. 1A to FIG. 4.

(Manufacturing method of painted metal sheet)

Subsequently, an example of a manufacturing method of the painted metal sheet of this embodiment is described.

First, a metal sheet as a base material is subjected to various pretreatments, including alkali degreasing treatment, washing treatment, pickling treatment, and other treatments to make a metal sheet surface clean.

Thereafter, various known rust-preventive paints are applied to the metal sheet to form the rust-preventive coating layer, as necessary, and allowed to dry. Here, the above-mentioned rust-preventive paint can be applied by generally known coating methods, such as roll coating, curtain flow coating, air spray, airless spray, immersion, bar coating, and brush coating, for example. A heating method of the rust-preventive paint is not limited, and any method can be used, for example, heating by hot air, near-infrared rays, far-infrared rays, induction heating, or a combination of these methods.

Next, paint for forming the organic resin coating layer is applied to the surface of the metal sheet on which the rust-preventive coating layer has been formed as necessary, and then heated and dried to form the organic resin coating layer. Here, the paint is prepared by making it contain the above-mentioned binder resin and various additives further, as necessary, in a solvent. Furthermore, the paint applied to at least one surface of the metal sheet is made to contain the organic resin particles, thereby forming the organic resin coating layer 20.

Here, it is necessary to pay attention to surface tension and viscosity of the paint used to form the organic resin coating layer 20 described above. More specifically, it is important to keep the surface tension of the paint within a range of 28 to 32 mN/m and the viscosity of the paint within a range of 400 to 700 mPa·s.

Here, the surface tension and viscosity mentioned above are measured as follows. The measurement temperature for the surface tension and viscosity is set to 25°C. More specifically, the surface tension of the paint is measured using a platinum ring method with DY-300 manufactured by Kyowa Interface Science Co., Ltd. Furthermore, the viscosity of the paint is identified by measuring a relationship between shear rate and the paint viscosity using a rheometer (MCR702e) manufactured by Anton Paar GmbH. At this time, the paint viscosity at a shear rate of 1000 s$^{-1}$ is used. This is because the shear rate acting on the paint during curtain coating, as described later, is approximately 1000 s$^{-1}$.

It is important that the application of the prepared paint be carried out using a curtain flow coater. By using the curtain flow coater to apply the paint containing particles, it is possible to apply the paint without allowing sedimentation of the particles or causing coating defects (roping).

After the paint is applied to the surface of the metal sheet (or the rust-preventive coating layer), the paint is heated and cured. In this process, the heating temperature can be set according to the solvent used, but for example, it is preferable to set the temperature within a range of 200 to 250°C. When the paint is heated and cured, attention should be paid to a temperature increasing rate. More precisely, it is important to set the temperature increasing rate to the boiling point of the solvent within a range of 7 to 27°C/sec. The organic resin coating layer 20 in which the organic resin particle state as described earlier is achieved can be formed by applying the paint having the surface tension and viscosity as described above using the curtain flow coater and heat-curing under the circumstances of the temperature increasing rate as described above. The temperature increasing rate is more preferably within a range of 15 to 25°C/sec.

The heating method of the paint is not limited, and any method can be used, for example, heating by hot air, near-infrared rays, far-infrared rays, induction heating, or a combination of these methods.

The above is a description of the manufacturing method for the painted metal sheet of this embodiment.

EXAMPLES

The painted metal sheet of this embodiment will be concretely explained below with reference to examples and comparative examples. Incidentally, the examples illustrated below are merely examples of the painted metal sheet of this embodiment, and the painted metal sheet of this embodiment is not limited to the examples below.

<1. Preparation of varnish paint>

"VYLON (registered trademark) 500 (Tg 4°C)", "VYLON (registered trademark) 270 (Tg 50°C)", and "VYLON (registered trademark) UR-6100 (Tg -30°C)", amorphous polyester resins manufactured by TOYOBO CO., LTD. were dissolved in an organic solvent (mixed at a mass ratio of cyclohexanone: SOLVESSO 150 (trade name) = 1:1). Here, a mixing ratio of these polyester resins was adjusted.

Next, "CYMEL (registered trademark) 303", melamine resin manufactured by Allnex Japan Inc. and "SUPER BECKAMINE (registered trademark)", melamine resin manufactured by DIC Corporation, were added to the above solution as curing agents. The melamine resins were added so that polyester resin solid content: melamine resin solid content = 70:30 at a mass ratio of solid content of resin. In addition, 0.5 mass% of "Catalyst 600", an acid catalyst manufactured by Allnex Japan Inc., was further added to this mixed solution of polyester resin and melamine resin. The mixed solution was stirred to obtain varnish paint. The polyester resin and melamine resin contained in the varnish paint mainly function as binder resins. The compressive elastic modulus of the binder resin was adjusted by adjusting the ratio of the polyester resin and the ratio of the melamine resin.

<2. Preparation of particle-containing paint>

As the organic resin particles, "Art pearl (registered trademark)", urethane resin manufactured by Negami Chemical Industrial Co., Ltd., or "MBX", acrylic beads manufactured by Sekisui Chemical Co., Ltd., was dispersed in the varnish paint to prepare particle-containing paint. At some levels, "TOKABLACK #7300", carbon black manufactured by Tokai Carbon Co., Ltd., and "R-820", titanium oxide manufactured by Ishihara Sangyo Kaisha, Ltd., were added as coloring agents (in Table 1 below, the "coloring agent" column is denoted as "C.B."). Here, the coloring agents were used so that the mass ratio of the above carbon black and titanium oxide (carbon black: titanium oxide) was 20:80. An amount of coloring agents added was such that the mass ratio of the varnish solids to the coloring agent (varnish solids: coloring agent) was 92:8. In addition, at some levels, only the above-mentioned titanium oxide was added as the coloring agent (in Table 1 below, the "coloring agent" column is denoted as "$TiO_2$"). The particle-containing paint was prepared by stirring the mixed solution.

<3. Preparation of backside paint>

For the backside paint, "Flexicoat 100", polyester/melamine paint manufactured by Nipponpaint Industrial Coatings Co., Ltd. was used. In this case, beige color paint was used, colored with white pigment, yellow pigment, and other pigments. The gloss level was adjusted by adding fine silica particles as a gloss adjuster in the paint. A dry film thickness was 5 $\mu$m.

<4. Preparation of rust-preventive paint>

"VYLON (registered trademark) 500 (Tg 4°C)" and "VYLON (registered trademark) 270 (Tg 50°C)", amorphous polyester resins manufactured by TOYOBO CO., LTD. were mixed so that the mass ratio was 1:1. Next, the polyester resin mixture was dissolved in an organic solvent (mixed at a mass ratio of cyclohexanone: SOLVESSO 150 (trade name) = 1:1) to prepare a primer varnish. "CORONATE HX", isocyanate manufactured by TOSOH Corporation was added to the primer varnish. An amount of isocyanate added was such that the mass ratio of the solid content of the varnish: isocyanate was 95:5. Furthermore, "K-WHITE #450H", condensed aluminum manufactured by TAYCA Co., Ltd., "SHIELDEX C303", calciummodified silica manufactured by GRACE Co., Ltd., calcium vanadate apatite (reagent manufactured by FUJIFILM Wako Pure Chemical Corporation), and magnesium hydroxide (reagent manufactured by Kanto Chemical Co., Ltd.) were used respectively as the rust-preventive pigments. Each was added so that a concentration in a dried coating was 50 mass%, and the rust-preventive paint was prepared by stirring the mixed solution.

<5. Preparation of sample materials>

Next, various types of metal sheets (all commercially available) were prepared as the base metal sheets. More precisely, Zn-0.2 mass%Al-plated steel sheet (GI), Zn-11 mass%Al-3 mass%Mg-0.2 mass%Si-plated steel sheet (SD), stainless steel 304 (SUS), and aluminum A5052 (Al) were used as the metal sheets. A thickness of each metal sheet was 0.6 mm.

To improve the adhesion between the metal sheet and the paint film, a chemical treatment film was formed on the surface of the metal sheet prior to the application of the paint. The chemical treatment film was formed by applying a chromate-free chemical treatment solution "CT-E300N" manufactured by Nihon Parkerizing Co., Ltd. under conditions that resulted in an adhesion amount of 100 mg/m$^2$ after drying, and then drying at a metal sheet temperature of 60°C.

Only the particle-containing paint or two layers of the rust-preventive paint and the particle-containing paint were applied to one side of the metal sheet, and the backside paint was applied to the opposite side, then heated and baked. The curtain flow coater was used to apply the above paints. A sample material was thereby prepared. Here, a plurality of sample materials were prepared for respective levels. Details of the sample materials manufactured in this manner are shown in Table 1 below. The properties of the particle-containing paint used (surface tension and viscosity at 25°C) and the heating and baking conditions are shown in Table 2 below.

The average film thicknesses T, t, average particle diameter ø, gloss levels (more specifically, 60-degree specular glosses $G_S$ (60°)) GA, GB, particle content, surface density of organic resin particles, compressive elastic moduli EA, EB at 25°C, and so on were measured for each of the obtained sample materials in accordance with the previously described methods. The results obtained are summarized in Table 1 below. In addition, when an amount of partially exposed particles was verified for the sample materials corresponding to the examples, it was verified that the amount was less than a permissible upper limit (20 particles/mm$^2$). The verification was made by repeating cross-sectional observation while observing and polishing resin-embedded samples and observing the number of partially exposed particles in a cross-sectional area equivalent to 1 mm$^2$.

[Table 1]

TABLE 1

| No. | METAL SHEET | T (µm) | ø (µm) | ø/T | t (µm) | ø/t | T/t | GA | GB | GA/GB | EA (MPa) | PARTICLE TYPE | PARTICLE CONTENT (vol%) | PARTICLE SURFACE DENCITY (PARTICLES/mm²) | URETHANE RESIN Tg (°C) | ACRYLIC RESIN Tg (°C) | EB (MPa) | Mø (µm) | Mø/T | COLORING AGENT | PRESENCE/ABSENCE | TYPE | REMARKS |
|---|---|---|---|---|---|---|---|---|---|---|---|---|---|---|---|---|---|---|---|---|---|---|---|
| 1 | GI | 30 | 60 | 2.00 | 1.0 | 60.00 | 30.0 | 13 | 15 | 0.9 | 120 | URETHANE | 5.6 | 70 | 10 | | 180 | | | C.B. | ABSENT | | EXAMPLE |
| 2 | GI | 10 | 60 | 6.00 | 0.9 | 66.67 | 11.1 | 7 | 10 | 0.7 | 120 | URETHANE | 7.8 | 33 | 10 | | 180 | | | C.B. | ABSENT | | EXAMPLE |
| 3 | GI | 8 | 50 | 6.25 | 0.8 | 62.50 | 10.0 | 7 | 10 | 0.7 | 120 | URETHANE | 5.6 | 22 | 10 | | 180 | | | C.B. | ABSENT | | COMPARATIVE EXAMPLE |
| 4 | GI | 10 | 50 | 5.00 | 1.0 | 50.00 | 10.0 | 7 | 10 | 0.7 | 120 | URETHANE | 11.1 | 56 | 10 | | 180 | | | C.B. | ABSENT | | EXAMPLE |
| 5 | GI | 40 | 100 | 2.50 | 1.5 | 66.67 | 26.7 | 7 | 10 | 0.7 | 120 | URETHANE | 5.6 | 56 | 10 | | 180 | | | C.B. | ABSENT | | EXAMPLE |
| 6 | GI | 10 | 110 | 11.00 | 1.5 | 73.33 | 6.7 | 6 | 10 | 0.6 | 120 | URETHANE | 11.1 | 25 | 10 | | 180 | | | C.B. | ABSENT | | COMPARATIVE EXAMPLE |
| 7 | GI | 40 | 45 | 1.13 | 1.0 | 45.00 | 40.0 | 7 | 6 | 1.2 | 120 | URETHANE | 3.4 | 75 | 10 | | 180 | | | C.B. | ABSENT | | COMPARATIVE EXAMPLE |
| 8 | GI | 30 | 60 | 2.00 | 0.6 | 100.00 | 50.0 | 7 | 6 | 1.2 | 120 | URETHANE | 5.6 | 70 | 10 | | 180 | | | C.B. | ABSENT | | COMPARATIVE EXAMPLE |
| 9 | GI | 40 | 60 | 1.50 | 0.7 | 85.71 | 57.1 | 7 | 6 | 1.2 | 120 | URETHANE | 5.6 | 93 | 10 | | 180 | | | C.B. | ABSENT | | EXAMPLE |
| 10 | GI | 40 | 100 | 2.50 | 0.6 | 166.67 | 66.7 | 7 | 6 | 1.2 | 120 | URETHANE | 8.9 | 45 | 10 | | 180 | | | C.B. | ABSENT | | COMPARATIVE EXAMPLE |
| 11 | GI | 30 | 60 | 2.00 | 1.0 | 60.00 | 30.0 | 13 | 15 | 0.9 | 63 | URETHANE | 5.6 | 70 | 10 | | 180 | | | C.B. | ABSENT | | EXAMPLE |
| 12 | GI | 30 | 60 | 2.00 | 1.0 | 60.00 | 30.0 | 13 | 15 | 0.9 | 55 | URETHANE | 5.6 | 70 | 10 | | 180 | | | C.B. | ABSENT | | EXAMPLE |
| 13 | GI | 30 | 60 | 2.00 | 1.0 | 60.00 | 30.0 | 13 | 15 | 0.9 | 148 | URETHANE | 5.6 | 70 | 10 | | 180 | | | C.B. | ABSENT | | EXAMPLE |
| 14 | GI | 30 | 60 | 2.00 | 1.0 | 60.00 | 30.0 | 13 | 15 | 0.9 | 155 | URETHANE | 5.6 | 70 | 10 | | 180 | | | C.B. | ABSENT | | EXAMPLE |
| 15 | GI | 30 | 60 | 2.00 | 1.0 | 60.00 | 30.0 | 13 | 15 | 0.9 | 120 | URETHANE | 5.6 | 70 | -30 | | 62 | | | C.B. | ABSENT | | EXAMPLE |
| 16 | GI | 30 | 60 | 2.00 | 1.0 | 60.00 | 30.0 | 13 | 15 | 0.9 | 120 | URETHANE | 5.6 | 70 | -40 | | 55 | | | C.B. | ABSENT | | EXAMPLE |
| 17 | GI | 30 | 60 | 2.00 | 1.0 | 60.00 | 30.0 | 13 | 15 | 0.9 | 120 | ACRYLIC | 5.6 | 70 | | 40 | 220 | 50 | 1.7 | C.B. | ABSENT | | EXAMPLE |
| 18 | GI | 30 | 60 | 2.00 | 1.0 | 60.00 | 30.0 | 13 | 15 | 0.9 | 120 | ACRYLIC | 5.6 | 70 | | 160 | 247 | 55 | 1.8 | C.B. | ABSENT | | EXAMPLE |
| 19 | GI | 30 | 60 | 2.00 | 1.0 | 60.00 | 30.0 | 13 | 15 | 0.9 | 120 | ACRYLIC | 5.6 | 70 | | 180 | 255 | 58 | 1.9 | C.B. | ABSENT | | EXAMPLE |
| 20 | GI | 30 | 60 | 2.00 | 1.0 | 60.00 | 30.0 | 13 | 15 | 0.9 | 120 | URETHANE | 5.6 | 70 | 10 | | 180 | | | C.B. | PRESENT | P | EXAMPLE |
| 21 | GI | 30 | 60 | 2.00 | 1.0 | 60.00 | 30.0 | 13 | 15 | 0.9 | 120 | URETHANE | 5.6 | 70 | 10 | | 180 | | | C.B. | PRESENT | Si | EXAMPLE |
| 22 | GI | 30 | 60 | 2.00 | 1.0 | 60.00 | 30.0 | 13 | 15 | 0.9 | 120 | URETHANE | 5.6 | 70 | 10 | | 180 | | | C.B. | PRESENT | V | EXAMPLE |
| 23 | GI | 30 | 60 | 2.00 | 1.0 | 60.00 | 30.0 | 13 | 15 | 0.9 | 120 | URETHANE | 5.6 | 70 | 10 | | 180 | | | C.B. | PRESENT | Mg | EXAMPLE |
| 24 | GI | 30 | 60 | 2.00 | 1.0 | 60.00 | 30.0 | 13 | 15 | 0.9 | 120 | URETHANE | 5.6 | 70 | 10 | | 180 | | | C.B. | PRESENT | P, V | EXAMPLE |
| 25 | SD | 30 | 60 | 2.00 | 1.0 | 60.00 | 30.0 | 13 | 15 | 0.9 | 120 | URETHANE | 5.6 | 70 | 10 | | 180 | | | C.B. | PRESENT | P | EXAMPLE |
| 26 | SUS | 30 | 60 | 2.00 | 1.0 | 60.00 | 30.0 | 13 | 15 | 0.9 | 120 | URETHANE | 5.6 | 70 | 10 | | 180 | | | C.B. | PRESENT | P | EXAMPLE |
| 27 | Al | 30 | 60 | 2.00 | 1.0 | 60.00 | 30.0 | 13 | 15 | 0.9 | 120 | URETHANE | 5.6 | 70 | 10 | | 180 | | | C.B. | PRESENT | P | EXAMPLE |
| 28 | GI | 30 | 60 | 2.00 | 1.0 | 60.00 | 30.0 | 13 | 15 | 0.9 | 120 | URETHANE | 5.6 | 70 | 10 | | 180 | | | ABSENT | ABSENT | | EXAMPLE |
| 29 | GI | 30 | 60 | 2.00 | 1.0 | 60.00 | 30.0 | 13 | 15 | 0.9 | 120 | URETHANE | 5.6 | 70 | 10 | | 180 | | | TiO₂ | ABSENT | | EXAMPLE |
| 30 | GI | 42 | 60 | 1.43 | 1.0 | 60.00 | 42.0 | 13 | 15 | 0.9 | 120 | URETHANE | 5.6 | 70 | 10 | | 180 | | | C.B. | ABSENT | | COMPARATIVE EXAMPLE |
| 31 | GI | 30 | 50 | 1.67 | 3.5 | 14.29 | 8.6 | 13 | 15 | 0.9 | 120 | URETHANE | 5.6 | 70 | 10 | | 180 | | | C.B. | ABSENT | | COMPARATIVE EXAMPLE |
| 32 | GI | 30 | 60 | 2.00 | 1.0 | 60.00 | 30.0 | 13 | 15 | 0.9 | 120 | URETHANE | 17.6 | 220 | 10 | | 180 | | | C.B. | ABSENT | | COMPARATIVE EXAMPLE |
| 33 | GI | 30 | 60 | 2.00 | 1.0 | 60.00 | 30.0 | 13 | 15 | 0.9 | 120 | URETHANE | 0.9 | 11 | 10 | | 180 | | | C.B. | ABSENT | | COMPARATIVE EXAMPLE |
| 34 | GI | 30 | 60 | 2.00 | 0.6 | 100.00 | 50.0 | 13 | 15 | 0.9 | 120 | URETHANE | 5.6 | 70 | 10 | | 180 | | | C.B. | ABSENT | | COMPARATIVE EXAMPLE |
| 35 | GI | 40 | 100 | 2.50 | 0.5 | 200.00 | 80.0 | 7 | 10 | 0.7 | 120 | URETHANE | 5.6 | 56 | 10 | | 180 | | | C.B. | ABSENT | | COMPARATIVE EXAMPLE |

[Table 2]

TABLE 2

| No. | PARTICLE-CONTAINING PAINT | | HEATING-BAKING CONDITION | | | REMARKS |
|---|---|---|---|---|---|---|
| | SURFACE TENSION (mN/m) | VISCOSITY (mPa·s) | TEMPERATURE INCREASING RATE TO BOILING POINT OF SOLVENT (°C/s) | ULTIMATE TEMPERATURE (°C) | HEATING TIME (s) | |
| 1 | 30 | 450 | 20 | 230 | 40 | EXAMPLE |
| 2 | 30 | 450 | 20 | 230 | 40 | EXAMPLE |
| 3 | 30 | 450 | 16 | 230 | 40 | COMPARATIVE EXAMPLE |
| 4 | 30 | 450 | 20 | 230 | 40 | EXAMPLE |
| 5 | 30 | 450 | 22 | 230 | 40 | EXAMPLE |
| 6 | 30 | 450 | 12 | 230 | 40 | COMPARATIVE EXAMPLE |
| 7 | 30 | 450 | 20 | 230 | 40 | COMPARATIVE EXAMPLE |
| 8 | 30 | 450 | 12 | 230 | 40 | COMPARATIVE EXAMPLE |

(continued)

| No. | PARTICLE-CONTAINING PAINT | | HEATING-BAKING CONDITION | | | REMARKS |
|-----|---------------------------|----------|-------------------------|---------------------------|----------------------|---------|
| | SURFACE TENSION (mN/m) | VISCOSITY (mPa·s) | TEMPERATURE INCREASING RATE TO BOILING POINT OF SOLVENT (°C/s) | ULTIMATE TEMPERATURE (°C) | HEATING TIME (s) | |
| 9 | 30 | 400 | 15 | 230 | 40 | EXAMPLE |
| 10 | 27 | 400 | 28 | 230 | 40 | COMPARATIVE EXAMPLE |
| 11 | 30 | 450 | 20 | 230 | 40 | EXAMPLE |
| 12 | 30 | 450 | 20 | 230 | 40 | EXAMPLE |
| 13 | 30 | 450 | 20 | 230 | 40 | EXAMPLE |
| 14 | 30 | 450 | 20 | 230 | 40 | EXAMPLE |
| 15 | 30 | 450 | 20 | 230 | 40 | EXAMPLE |
| 16 | 30 | 450 | 20 | 230 | 40 | EXAMPLE |
| 17 | 30 | 450 | 20 | 230 | 40 | EXAMPLE |
| 18 | 30 | 450 | 20 | 230 | 40 | EXAMPLE |
| 19 | 30 | 450 | 20 | 230 | 40 | EXAMPLE |
| 20 | 30 | 450 | 20 | 230 | 40 | EXAMPLE |
| 21 | 30 | 450 | 20 | 230 | 40 | EXAMPLE |
| 22 | 30 | 450 | 20 | 230 | 40 | EXAMPLE |
| 23 | 30 | 450 | 20 | 230 | 40 | EXAMPLE |
| 24 | 30 | 450 | 20 | 230 | 40 | EXAMPLE |
| 25 | 30 | 450 | 20 | 230 | 40 | EXAMPLE |
| 26 | 30 | 450 | 20 | 230 | 40 | EXAMPLE |
| 27 | 30 | 450 | 20 | 230 | 40 | EXAMPLE |
| 28 | 30 | 450 | 20 | 230 | 40 | EXAMPLE |
| 29 | 30 | 450 | 20 | 230 | 40 | EXAMPLE |
| 30 | 30 | 450 | 20 | 230 | 40 | COMPARATIVE EXAMPLE |
| 31 | 35 | 1500 | 20 | 230 | 40 | COMPARATIVE EXAMPLE |
| 32 | 30 | 450 | 20 | 230 | 40 | COMPARATIVE EXAMPLE |
| 33 | 30 | 450 | 20 | 230 | 40 | COMPARATIVE EXAMPLE |
| 34 | 30 | 450 | 5 | 230 | 40 | COMPARATIVE EXAMPLE |
| 35 | 30 | 360 | 22 | 230 | 40 | COMPARATIVE EXAMPLE |

Each of the sample materials obtained as described above was evaluated in terms of the grainy appearance, work adhesion, pressure mark resistance, and corrosion resistance. Evaluation method is as follows.

(Grainy appearance)

A resin molded article (with the grainy appearance, resin used: exterior material of iR ADVC5250F, a multifunction printer manufactured by Canon Inc.) was used apart from the surface of the sample material. Each of the sample material and the resin molded article was evaluated by visual observation from a distance of 30 cm and tactile impression to investigate whether the resin molded article could be distinguished from the sample material. Any 20 evaluators with visual acuity of 1.0 or better were selected. Among these 20 evaluators, a percentage of the number of evaluators who could distinguish between the two materials was calculated as a distinguishable percentage, which served as the evaluation of design properties. Evaluation criteria were as follows. A passing level was set to 3 or higher.

<Evaluation criteria>

Score 5: Distinguishable percentage is 0%

4: Distinguishable percentage is more than 0% and 10% or less
3: Distinguishable percentage is more than 10% and 20% or less
2: Distinguishable percentage is more than 20% and 50% or less
1: Distinguishable percentage is more than 50%

(Work adhesion)

A cylindrical cup was molded with the sample material surface facing outward. At this time, a die with a diameter ø of 50 mm was used. Both the die and punch had a shoulder radius of 5 mm. A drawing height was set at 50 mm, and a blank holding pressure was set at 1 ton. After processing, cellophane tape (Cellotape (registered trademark) manufactured by Nichiban Co., Ltd., width 24 mm) was applied to the cup body. Subsequently, the cellophane tape was peeled off in a 45° direction relative to the surface normal direction of the sample material. A paint adhesion area ratio on the peeled cellophane tape was visually evaluated. The work adhesion was evaluated using the following criteria, which served as the evaluation of the design properties. A passing level was set to 3 or higher.

<Evaluation Criteria>

Score 5: No paint film peeling

4: Paint film peeling area ratio is less than 5%
3: Paint film peeling area ratio is 5% or more and less than 10%
2: Paint film peeling area ratio is 10% or more and less than 30%
1: Paint film peeling area ratio is 30% or more

(Pressure mark resistance)

Two sample materials of the same level were used, and a surface of one sample material was superimposed on a back surface of the other sample material, which was then pressurized at 10 MPa. A test temperature was set at 50°C, and the test time was set at 10 minutes. After the test, an appearance of the surface was visually evaluated, and the presence or absence of pressure marks was evaluated. The pressure mark resistance was evaluated using the following evaluation criteria, which served as the evaluation of the design properties. A passing level was set to 3 or higher.

<Evaluation Criteria>

Score 5: Pressure mark is not visible when viewed from a front (surface normal direction of the sample material) or from an oblique angle.

4: Pressure mark is not visible from the front but slightly visible when viewed from the oblique angle.
3: Pressure mark is slightly visible when viewed from the front and when viewed from the oblique angle.
2: Pressure mark is slightly visible when viewed from the front but clearly visible when viewed from the oblique angle.
1: Pressure mark is clearly visible when viewed from the front or from the oblique angle.

(Corrosion resistance)

An X-shaped cut was formed on the surface of the sample material using an NT cutter. In this process, the flaw was made to reach the base metal sheet. Subsequently, a salt spray test (SST) was conducted for 240 hours in accordance with JIS Z 2371:2015. After the test, the sample material was cleaned and dried, and a maximum swelling width from the X-shaped cut was measured. The maximum swelling width on one side of the swelling that occurred on both sides of the flaw was measured. A 10x loupe was used for observation. The corrosion resistance was evaluated using the following evaluation criteria. The passing level was set to 3 or higher.

<Evaluation criteria>

Score 5: Maximum swelling width is less than 2 mm

4: Maximum swelling width is 2 mm or more and less than 3 mm
3: Maximum swelling width is 3 mm or more and less than 5 mm
2: Maximum swelling width is 5 mm or more and less than 7 mm
1: Maximum swelling width is 7 mm or more

The results obtained are summarized in Table 3 below.

[Table 3]

TABLE 3

| No. | EVALUATION RESULT | | | | REMARKS |
|---|---|---|---|---|---|
| | GRAINY APPEARANCE | WORK ADHESION | PRESSURE MARK RESISTANCE | CORROSION RESISTANCE | |
| 1 | 4 | 5 | 5 | 3 | EXAMPLE |
| 2 | 4 | 3 | 5 | 3 | EXAMPLE |
| 3 | 4 | 2 | 5 | 3 | COMPARATIVE EXAMPLE |
| 4 | 4 | 3 | 5 | 3 | EXAMPLE |
| 5 | 4 | 4 | 5 | 3 | EXAMPLE |
| 6 | 4 | 2 | 4 | 3 | COMPARATIVE EXAMPLE |
| 7 | 2 | 4 | 5 | 3 | COMPARATIVE EXAMPLE |
| 8 | 4 | 2 | 5 | 3 | COMPARATIVE EXAMPLE |
| 9 | 4 | 4 | 5 | 3 | EXAMPLE |
| 10 | 4 | 2 | 5 | 3 | COMPARATIVE EXAMPLE |
| 11 | 4 | 4 | 5 | 3 | EXAMPLE |
| 12 | 4 | 3 | 5 | 3 | EXAMPLE |
| 13 | 4 | 4 | 5 | 3 | EXAMPLE |
| 14 | 4 | 3 | 5 | 3 | EXAMPLE |
| 15 | 4 | 4 | 5 | 3 | EXAMPLE |
| 16 | 4 | 4 | 5 | 3 | EXAMPLE |
| 17 | 4 | 5 | 5 | 3 | EXAMPLE |
| 18 | 5 | 4 | 5 | 3 | EXAMPLE |
| 19 | 4 | 4 | 4 | 3 | EXAMPLE |
| 20 | 4 | 5 | 5 | 4 | EXAMPLE |

(continued)

| No. | EVALUATION RESULT | | | | REMARKS |
|-----|-------------------|--|--|--|---------|
| | GRAINY APPEARANCE | WORK ADHESION | PRESSURE MARK RESISTANCE | CORROSION RESISTANCE | |
| 21 | 4 | 5 | 5 | 4 | EXAMPLE |
| 22 | 4 | 5 | 5 | 4 | EXAMPLE |
| 23 | 4 | 5 | 5 | 4 | EXAMPLE |
| 24 | 4 | 5 | 5 | 5 | EXAMPLE |
| 25 | 4 | 5 | 5 | 5 | EXAMPLE |
| 26 | 4 | - | 5 | 5 | EXAMPLE |
| 27 | 4 | - | 5 | 5 | EXAMPLE |
| 28 | 3 | 5 | 5 | 3 | EXAMPLE |
| 29 | 4 | 5 | 5 | 3 | EXAMPLE |
| 30 | 2 | 5 | 5 | 3 | COMPARATIVE EXAMPLE |
| 31 | 2 | 5 | 5 | 3 | COMPARATIVE EXAMPLE |
| 32 | 5 | 2 | 5 | 2 | COMPARATIVE EXAMPLE |
| 33 | 2 | 5 | 5 | 3 | COMPARATIVE EXAMPLE |
| 34 | 4 | 2 | 5 | 3 | COMPARATIVE EXAMPLE |
| 35 | 4 | 1 | 5 | 3 | COMPARATIVE EXAMPLE |

As is clear from Table 3 above, the sample materials corresponding to the examples of the present invention exhibited excellent grainy appearance, work adhesion, pressure mark resistance, and corrosion resistance, while the sample materials corresponding to the comparative examples of the present invention failed at least one of the grainy appearance or work adhesion.

Note that in No. 26 and No. 27, which used stainless steel 304 (SUS) or aluminum A5052 (Al) as the metal sheet, the metal sheet broke during the molding process performed to evaluate "work adhesion", so "work adhesion" could not be evaluated. Therefore, in the above Table 3, the "work adhesion" columns for No. 26 and No. 27 are marked as "-"

In addition, productivity when No. 1 particle-containing paint shown in Table 1 above was applied with a curtain flow coater was compared to the case when it was applied with a roll coater generally used in the manufacture of pre-painted steel sheets. The roll coater was a two-roll coater made up of a pickup roll and an applicator roll. A speed of the base material was varied from 10 mpm to 80 mpm in 10 mpm increments.

In the case of the curtain flow coater, a beautiful appearance was obtained when a speed of the metal sheet was within a range of 50 to 80 mpm, and the performance was equivalent to that of No. 1 shown in Table 1 above. On the other hand, in the case of the roll coater, roping occurred when a sheet-passage speed was within a range of 20 to 80 mpm, while a beautiful appearance was obtained when the sheet-passage speed was 10 mpm, similar to that of the paint with the curtain flow coater. From these results, it can be said that the productivity is 5 to 8 times higher when painting with the curtain flow coater than with the roll coater, which is a general-purpose painting method.

The preferred embodiments of the present invention have been described in detail above with reference to the attached drawings, but the present invention is not limited to such examples. It is apparent that a person having common knowledge in the technical field to which the present invention belongs is able to devise various variation or modification examples within the range of technical ideas described in the claims, and it should be understood that such examples belong to the technical scope of the present invention as a matter of course.

The embodiment disclosed herein is an example in all respects and should not be considered to be restrictive. The above-described embodiments may be omitted, substituted, or modified in various forms without departing from the scope of the appended claims and the configuration and gist that fall within the technical scope of the present invention as described below. For example, configuration requirements of the above-described embodiments can be arbitrarily combined within a range that does not impair the effects. Further, the operations and effects about the configuration requirements relating to an arbitrary combination can be obtained as a matter of course from the combination, and those skilled in the art can obtain clear other operations and other effects from the description herein.

Further, the effects explained herein are merely explanatory or illustrative in all respects and not restrictive. That is, the technique relating to the present invention can offer other clear effects to those skilled in the art from the description herein, in addition to or in place of the above-described effects.

Note that the following configuration also belongs to the technical scope of the present invention.

[1] A painted metal sheet including:

a metal sheet; an organic resin coating layer located on a surface of the metal sheet; and organic resin particles dispersed in the organic resin coating layer, wherein

a content of the organic resin particles in the organic resin coating layer is 1.0 to 16.6 volume% per side to a total solid volume of the organic resin coating layer,

in a case where the organic resin coating layer is viewed from above in plan view, the organic resin particles are dispersed in the organic resin coating layer at a surface density of 30 to 120 particles/mm$^2$, and

relationships expressed in Formulas (1) to (4) below are established in a cross-section obtained by cutting the organic resin coating layer at any position in a thickness direction.

$$10 \leq T \leq 40 \ ... \ \text{Formula (1)}$$

$$50 \leq \o \leq 100 \ ... \ \text{Formula (2)}$$

$$1.50 \leq \o/T \leq 10.00 \ ... \ \text{Formula (3)}$$

$$15.00 \leq \o/t \leq 90.00 \ ... \ \text{Formula (4)}$$

Here, in Formulas (1) to (4) above,

T: an average film thickness of the organic resin coating layer at each portion where the organic resin particle is not present in the cross-section,

$\o$: an average particle diameter of the organic resin particles,

t: an average film thickness of particle-covered portions, each of which is a portion in which a part of the organic resin particle, which protrudes from a surface position of the organic resin coating layer at the portion where the organic resin particle is not present, is covered with the organic resin coating layer in the cross-section,

where units of the T, $\o$, and t are each $\mu$m.

[2] The painted metal sheet according to [1], wherein

the organic resin coating layer is located on both surfaces of the metal sheet, and the organic resin particles are present only in the organic resin coating layer located on one surface of the metal sheet, and

relationships expressed in Formulas (5) and (6) below are established for the two organic resin coating layers located on both surfaces of the metal sheet.

$$3 \leq GA \leq 30 \ ... \ \text{Formula (5)}$$

$$0.7 \leq GA/GB \leq 1.3 \ ... \ \text{Formula (6)}$$

Here, in Formulas (5) and (6) above,

GA: a 60-degree specular gloss $G_S$ (60°) specified in JIS Z 8741:1997 on the surface of the organic resin coating layer containing the organic resin particle,

GB: a 60-degree specular gloss $G_S$ (60°) specified in JIS Z 8741:1997 on the surface of the organic resin coating layer not containing the organic resin particle.

[3] The painted metal sheet according to [1] or [2], wherein
the T and t satisfy a relationship expressed in Formula (7) below.

$$5.0 \leq T/t \leq 60.0 \ ... \ \text{Formula (7)}$$

[4] The painted metal sheet according to any one of [1] to [3], wherein
a binder resin contained in the organic resin coating layer and the organic resin particles satisfy relationships expressed in Formulas (8) to (10) below.

$$EA \leq EB \ ... \ \text{Formula (8)}$$

$$60 \leq EA \leq 150 \ ... \ \text{Formula (9)}$$

$$60 \leq EB \leq 250 \ ... \ \text{Formula (10)}$$

Here, in Formulas (8) to (10) above,

EA: a compressive elastic modulus of the binder resin at 25°C contained in the organic resin coating layer,
EB: a compressive elastic modulus of the organic resin particle at 25°C,

where units of the EA and EB are each MPa.
[5] The painted metal sheet according to any one of [1] to [4], wherein

the organic resin particles are urethane-based resin particles, and
a glass transition temperature Tg of urethane-based resin is in a range of -40 to 40°C.

[6] The painted metal sheet according to any one of [1] to [4], wherein

the organic resin particles are acrylic-based resin particles, and
a glass transition temperature Tg of acrylic-based resin is in a range of 40 to 160°C.

[7] The painted metal sheet according to [6], wherein

in the cross-section obtained by cutting the organic resin coating layer at any position in the thickness direction, a cross-sectional shape of at least some of the acrylic-based resin particles is an approximately elliptical shape, a minor axis direction of the approximately elliptical shape is substantially parallel to the thickness direction of the organic resin coating layer, and a major axis direction of the approximately elliptical shape is substantially parallel to an orthogonal direction to the thickness direction, and
an average length Mø of the minor axes of the approximately elliptical shapes and the T satisfy a relationship expressed in Formula (11) below.

$$1.5 \leq M\text{ø}/T \leq 80.0 \ ... \ \text{Formula (11)}$$

Here, a unit of the average length Mø of the minor axes is $\mu$m.
[8] The painted metal sheet according to any one of [1] to [7], wherein
the metal sheet is a zinc-based plated steel sheet, where a zinc-based plating layer, which is a plating layer containing at least zinc, is located on a surface of a base steel sheet.
[9] The painted metal sheet according to [8], wherein
a rust-preventive coating layer containing a rust-preventive pigment and a resin is further located between the organic resin coating layer and the zinc-based plating layer.
[10] The painted metal sheet according to [9], wherein
the rust-preventive pigment is a pigment containing at least one or more elements from among P, V, Si, and Mg.
[11] The painted metal sheet according to any one of [1] to [10], wherein
the organic resin coating layer further contains a coloring agent.

EXPLANATION OF CODES

1     painted metal sheet

10       metal sheet
20, 25   organic resin coating layer
30       rust-preventive coating layer
201     organic resin particle
203     binder resin

## Claims

1. A painted metal sheet comprising:

   a metal sheet; an organic resin coating layer located on a surface of the metal sheet; and organic resin particles dispersed in the organic resin coating layer, wherein
   a content of the organic resin particles in the organic resin coating layer is 1.0 to 16.6 volume% per side to a total solid volume of the organic resin coating layer,
   in a case where the organic resin coating layer is viewed from above in plan view, the organic resin particles are dispersed in the organic resin coating layer at a surface density of 30 to 120 particles/mm$^2$, and
   relationships expressed in Formulas (1) to (4) below are established in a cross-section obtained by cutting the organic resin coating layer at any position in a thickness direction.

$$10 \leq T \leq 40 \text{ ... Formula (1)}$$

$$50 \leq \varnothing \leq 100 \text{ ... Formula (2)}$$

$$1.50 \leq \varnothing/T \leq 10.00 \text{ ... Formula (3)}$$

$$15.00 \leq \varnothing/t \leq 90.00 \text{ ... Formula (4)}$$

   Here, in Formulas (1) to (4) above,

   T: an average film thickness of the organic resin coating layer at each portion where the organic resin particle is not present in the cross-section,
   $\varnothing$: an average particle diameter of the organic resin particles,
   t: an average film thickness of particle-covered portions, each of which is a portion in which a part of the organic resin particle, which protrudes from a surface position of the organic resin coating layer at the portion where the organic resin particle is not present, is covered with the organic resin coating layer in the cross-section,

   where units of the T, $\varnothing$, and t are each $\mu$m.

2. The painted metal sheet according to claim 1, wherein

   the organic resin coating layer is located on both surfaces of the metal sheet, and the organic resin particles are present only in the organic resin coating layer located on one surface of the metal sheet, and
   relationships expressed in Formulas (5) and (6) below are established for the two organic resin coating layers located on both surfaces of the metal sheet.

$$3 \leq GA \leq 30 \text{ ... Formula (5)}$$

$$0.7 \leq GA/GB \leq 1.3 \;...\; \text{Formula (6)}$$

Here, in Formulas (5) and (6) above,

GA: a 60-degree specular gloss $G_S$ (60°) specified in JIS Z 8741:1997 on the surface of the organic resin coating layer containing the organic resin particle,
GB: a 60-degree specular gloss $G_S$ (60°) specified in JIS Z 8741:1997 on the surface of the organic resin coating layer not containing the organic resin particle.

3. The painted metal sheet according to claim 1 or 2, wherein
the T and t satisfy a relationship expressed in Formula (7) below.

$$5.0 \leq T/t \leq 60.0 \;...\; \text{Formula (7)}$$

4. The painted metal sheet according to claim 1 or 2, wherein
a binder resin contained in the organic resin coating layer and the organic resin particles satisfy relationships expressed in Formulas (8) to (10) below.

$$EA \leq EB \;...\; \text{Formula (8)}$$

$$60 \leq EA \leq 150 \;...\; \text{Formula (9)}$$

$$60 \leq EB \leq 250 \;...\; \text{Formula (10)}$$

Here, in Formulas (8) to (10) above,

EA: a compressive elastic modulus of the binder resin at 25°C contained in the organic resin coating layer,
EB: a compressive elastic modulus of the organic resin particle at 25°C,

where units of the EA and EB are each MPa.

5. The painted metal sheet according to claim 1 or 2, wherein

the organic resin particles are urethane-based resin particles, and
a glass transition temperature Tg of urethane-based resin is in a range of -40 to 40°C.

6. The painted metal sheet according to claim 1 or 2, wherein

the organic resin particles are acrylic-based resin particles, and
a glass transition temperature Tg of acrylic-based resin is in a range of 40 to 160°C.

7. The painted metal sheet according to claim 6, wherein

in the cross-section obtained by cutting the organic resin coating layer at any position in the thickness direction, a cross-sectional shape of at least some of the acrylic-based resin particles is an approximately elliptical shape, a minor axis direction of the approximately elliptical shape is substantially parallel to the thickness direction of the organic resin coating layer, and a major axis direction of the approximately elliptical shape is substantially parallel to an orthogonal direction to the thickness direction, and
an average length Mø of the minor axes of the approximately elliptical shapes and the T satisfy a relationship expressed in Formula (11) below.

$$1.5 \leq M\text{ø}/T \leq 80.0 \;...\; \text{Formula (11)}$$

Here, a unit of the average length of the minor axes Mø is $\mu$m.

8. The painted metal sheet according to claim 1 or 2, wherein
the metal sheet is a zinc-based plated steel sheet, where a zinc-based plating layer, which is a plating layer containing at least zinc, is located on a surface of a base steel sheet.

9. The painted metal sheet according to claim 8, wherein
a rust-preventive coating layer containing a rust-preventive pigment and a resin is further located between the organic resin coating layer and the zinc-based plating layer.

10. The painted metal sheet according to claim 9, wherein
the rust-preventive pigment is a pigment containing at least one or more elements from among P, V, Si, and Mg.

11. The painted metal sheet according to claim 1 or 2, wherein
the organic resin coating layer further contains a coloring agent.

FIG. 1A

FIG. 1B

**FIG. 1C**

1

203 201 201 201 201

20

10

20

201 201 201 201 203

**FIG. 1D**

1

203 201 201 201 201

20

30

10

**FIG. 2**

**FIG. 3**

OBSERVATION
VISUAL FIELD
(AREA: 1 mm²)

20

201

**FIG. 4**

M$\phi_1$

201

20

203

10

## INTERNATIONAL SEARCH REPORT

| International application No. |
| --- |
| **PCT/JP2024/024080** |

| | |
| --- | --- |
| **A.** | **CLASSIFICATION OF SUBJECT MATTER** |
| | ***B32B 15/08***(2006.01)i; ***B32B 7/022***(2019.01)i; ***B32B 7/027***(2019.01)i; ***B32B 15/18***(2006.01)i; ***B32B 27/20***(2006.01)i |
| | FI:  B32B15/08 G; B32B27/20 Z; B32B7/022; B32B7/027; B32B15/18 |

According to International Patent Classification (IPC) or to both national classification and IPC

| | |
| --- | --- |
| **B.** | **FIELDS SEARCHED** |

Minimum documentation searched (classification system followed by classification symbols)

   B32B15/08; B32B7/022; B32B7/027; B32B15/18; B32B27/20; B05D5/06; B05D7/24

Documentation searched other than minimum documentation to the extent that such documents are included in the fields searched

   Published examined utility model applications of Japan 1922-1996
   Published unexamined utility model applications of Japan 1971-2024
   Registered utility model specifications of Japan 1996-2024
   Published registered utility model applications of Japan 1994-2024

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2004-209974 A (NIPPON STEEL CORPORATION) 29 July 2004 (2004-07-29) <br> claims, paragraphs [0001], [0014]-[0058], fig. 1-4 | 1-11 |
| A | WO 2018/164276 A1 (NIPPON STEEL & SUMITOMO METAL CORPORATION) 13 September 2018 (2018-09-13) <br> entire text | 1-11 |
| A | JP 2017-61750 A (NIPPON STEEL & SUMITOMO METAL CORPORATION) 30 March 2017 (2017-03-30) <br> entire text | 1-11 |
| A | KR 10-2020-0105612 A (HANNSOLUTION CO., LTD.) 08 September 2020 (2020-09-08) <br> entire text | 1-11 |

| | |
| --- | --- |
| ☐ Further documents are listed in the continuation of Box C. | ☑ See patent family annex. |

|  |  |  |  |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 September 2024** | **24 September 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT
### Information on patent family members

International application No.

**PCT/JP2024/024080**

| Patent document cited in search report | | | Publication date (day/month/year) | Patent family member(s) | | | Publication date (day/month/year) |
|---|---|---|---|---|---|---|---|
| JP | 2004-209974 | A | 29 July 2004 | (Family: none) | | | |
| WO | 2018/164276 | A1 | 13 September 2018 | US | 2020/0032399 | A1 | |
| | | | | CN | 110382739 | A | |
| | | | | KR | 10-2019-0113900 | A | |
| | | | | MX | 2019010557 | A | |
| | | | | TW | 201836842 | A | |
| JP | 2017-61750 | A | 30 March 2017 | (Family: none) | | | |
| KR | 10-2020-0105612 | A | 08 September 2020 | (Family: none) | | | |

Form PCT/ISA/210 (patent family annex) (July 2022)

EP 4 696 502 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014112544 A